(19) Europäisches Patentamt
European Patent Office
Office européen des brevets

(11) **EP 4 415 449 A1**

(12) **EUROPEAN PATENT APPLICATION**
published in accordance with Art. 153(4) EPC

(43) Date of publication:
**14.08.2024  Bulletin 2024/33**

(21) Application number: **21959736.6**

(22) Date of filing: **09.10.2021**

(51) International Patent Classification (IPC):
***H04W 72/04*** (2023.01)    ***H04B 7/0456*** (2017.01)

(52) Cooperative Patent Classification (CPC):
**H04B 7/0456; H04W 72/04**

(86) International application number:
**PCT/CN2021/122915**

(87) International publication number:
**WO 2023/056646 (13.04.2023 Gazette 2023/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **LI, Mingju
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **CHANNEL STATE INFORMATION REPORTING METHOD AND APPARATUS, AND STORAGE MEDIUM**

(57)  The present disclosure relates to a channel state information reporting method and apparatus, and a storage medium. The channel state information reporting method is applied to a terminal and comprises: measuring channel state information on the basis of at least one channel measurement resource (CMR), the channel state information comprising a measurement result obtained by measurement on the basis of the at least one CMR, and the measurement result comprising a precoding matrix indicator (PMI) shared by the at least one CMR; and reporting the channel state information. According to the present disclosure, a joint PMI feedback method based on at least one CMR is realized, the signaling overhead is reduced, and the transmission performance based on multiple CMRs is improved.

the CSI is obtained by a measurement based on at least one CMR, the CSI includes a measurement result of the measurement based on the at least one CMR, and the measurement result includes a PMI shared by the at least one CMR — S11

the CSI is reported — S12

FIG. 2

**Description**

**FIELD**

The present disclosure relates to the field of communication technology, and more particularly to a method and apparatus for reporting channel state information, and a storage medium.

**BACKGROUND**

In the new radio (NR) technology, for example, when a communication frequency band is within a frequency range 2, due to quick attenuation in a high-frequency channel, beam-based transmission and reception are used to ensure coverage.

In related art, a network device is configured with multiple channel measurement resources (CMRs), such as multiple transmission and reception points (TRPs). When the network device has multiple TRPs, the network device can use the multiple TRPs to provide services for a terminal, for example, use the multiple TRPs to transmit information to the terminal in a physical downlink shared channel (DSCH). When the network device uses multiple TRPs to provide services for the terminal, the terminal feeds back precoding matrix indicators (PMIs) of the multiple TRPs to the network device separately, that is, the terminal needs to feed back multiple PMIs, which causes a large signaling overhead.

**SUMMARY**

In order to solve the problems existing in the related art, embodiments of the present disclosure provide a method and apparatus for reporting channel state information, and a storage medium.

According to a first aspect of embodiments of the present disclosure, there is provided a method for reporting channel state information, which is performed by a terminal and includes: obtaining the channel state information through a measurement based on at least one channel measurement resource CMR, and reporting the channel state information. The channel state information includes a measurement result of the measurement based on the at least one CMR, and the measurement result includes a precoding matrix indicator PMI shared by the at least one CMR.

In an implementation, each CMR of the at least one CMR corresponds to a CMR resource set, and at least two different CMRs correspond to different CMR resource sets.

In an implementation, the CMR resource set corresponds to a resource parameter, the resource parameter includes one or more of a pool index of a control resource set, a transmission and reception point, or a remote radio header, and different CMR resource sets correspond to different resource parameters.

In an implementation, the PMI includes one or more PMI feedback parameters.

In an implementation, a phase offset exists between V matrices corresponding to at least two CMRs of the at least one CMR, and the one or more PMI feedback parameters are carried in an X1 information field and/or an X2 information field; the X1 information field is configured to carry a first wideband PMI feedback parameter, and the X2 information field is configured to carry a second wideband PMI feedback parameter or a narrowband PMI feedback parameter.

In an implementation, the first wideband PMI feedback parameter carried in the X1 information field includes a first group of PMI feedback parameters; and the first group of PMI feedback parameters include at least one of: a first PMI feedback parameter, which is determined based on a number of antenna ports in a first dimension and a number of oversamplings in a first dimension, or based on a number of antenna ports in a first dimension and a number of beams in a first dimension; a second PMI feedback parameter, which is determined based on a number of antenna ports in a second dimension and a number of oversamplings in a second dimension, or based on a number of antenna ports in a second dimension and a number of beams in a second dimension; a third PMI feedback parameter, which is used to indicate a relative difference between other layers and a first layer in terms of the first PMI feedback parameter and/or the second PMI feedback parameter; or a fourth PMI feedback parameter, which indicates the phase offset between the V matrices corresponding to the at least two CMRs of the at least one CMR.

In an implementation, the first group of PMI feedback parameters include the first PMI feedback parameter, and first PMI feedback parameters corresponding to at least two CMRs of the at least one CMR are the same; and/or the first group of PMI feedback parameters include the second PMI feedback parameter, and second PMI feedback parameters corresponding to at least two CMRs of the at least one CMR are the same; and/or the first group of PMI feedback parameters include the third PMI feedback parameter, and third PMI feedback parameters corresponding to at least two CMRs of the at least one CMR are the same.

In an implementation, the second wideband PMI feedback parameter or the narrowband PMI feedback parameter carried in the X2 information field is used for at least one of: selecting a beam, determining a phase offset, indicating a position of a frequency-domain unit selected, or indicating a position of a nonzero coefficient.

In an implementation, the first wideband PMI feedback parameter carried in the X1 information field includes a second group of PMI feedback parameters; and the second group of PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; an eighth PMI feedback parameter, which indicates the phase offset between the V matrices corresponding to the at least two CMRs of the at least one CMR; or a ninth PMI feedback parameter, which is used for adjusting a relative magnitude of a wideband.

In an implementation, the second group of PMI feedback parameters include the fifth PMI feedback parameter, and fifth PMI feedback parameters corresponding to at least two CMRs of the at least one CMR are the same; and/or the second group of PMI feedback parameters include the sixth PMI feedback parameter, and sixth PMI feedback parameters corresponding to at least two CMRs of the at least one CMR are the same; and/or the second group of PMI feedback parameters include the seventh PMI feedback parameter, and seventh PMI feedback parameters corresponding to at least two CMRs of the at least one CMR are the same; and/or the second group of PMI feedback parameters include the ninth PMI feedback parameter, and ninth PMI feedback parameters corresponding to at least two CMRs of the at least one CMR are the same.

In an implementation, the second group of PMI feedback parameters include one sixth PMI feedback parameter or a plurality of sixth PMI feedback parameters. The one sixth PMI feedback parameter is determined based on the number of antenna ports in the first dimension, the number of antenna ports in the second dimension, and/or the number of beams selected, of a same transmission and reception point/radio remote head. The plurality of sixth PMI feedback parameters are determined based on the number of antenna ports in the first dimension of a plurality of different transmission and reception points/radio remote heads, the number of antenna ports in the second dimension of the plurality of different transmission and reception points/radio remote heads, and/or the number of beams selected of the plurality of different transmission and reception points/radio remote heads.

In an implementation, each of the at least one CMR corresponds to a different V matrix, and the one or more PMI feedback parameters are carried in an X1 information field or an X2 information field. The X1 information field is configured to carry a first wideband PMI feedback parameter, and the X2 information field is configured to carry a second wideband PMI feedback parameter or a narrowband PMI feedback parameter.

In an implementation, each of the at least one CMR corresponds to a different V matrix, and the first wideband PMI feedback parameter carried in the X1 information field includes: a first PMI feedback parameter, which is determined based on a number of antenna ports in a first dimension and a number of oversamplings in a first dimension, or based on a number of antenna ports in a first dimension and a number of beams in a first dimension; or a second PMI feedback parameter, which is determined based on a number of antenna ports in a second dimension and a number of oversamplings in a second dimension, or based on a number of antenna ports in a second dimension and a number of beams in a second dimension; or a third PMI feedback parameter, which is used to indicate a relative difference between other layers and a first layer in terms of the first PMI feedback parameter and/or the second PMI feedback parameter.

In an implementation, each of the at least one CMR corresponds to a different V matrix, and the second wideband PMI feedback parameter or the narrowband PMI feedback parameter carried in the X2 information field is used for selecting a beam or determining a phase offset.

In an implementation, the first wideband PMI feedback parameter carried in the X1 information field includes a plurality of different first PMI feedback parameters, and different first PMI feedback parameters correspond to different CMRs; or the first wideband PMI feedback parameter carried in the X1 information field includes a plurality of different second PMI feedback parameters, and different second PMI feedback parameters correspond to different CMRs; or the first wideband PMI feedback parameter carried in the X1 information field includes a plurality of different third PMI feedback parameters, and different third PMI feedback parameters correspond to different CMRs.

In an implementation, each of the at least one CMR corresponds to a different V matrix, and the one or more PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; or a ninth PMI feedback parameter, which is used for adjusting a relative magnitude of a wideband.

In an implementation, each of the at least one CMR corresponds to a different V matrix, and the one or more PMI feedback parameters include: a plurality of different fifth PMI feedback parameters, different fifth PMI feedback parameters corresponding to different CMRs; and/or a plurality of different sixth PMI feedback parameters, different sixth PMI feedback parameters corresponding to different CMRs; and/or a plurality of different seventh PMI feedback parameters, different seventh PMI feedback parameters corresponding to different CMRs; and/or a plurality of different ninth PMI feedback parameters, different ninth PMI feedback parameters corresponding to different CMRs.

According to a second aspect of embodiments of the present disclosure, there is provided a method for reporting channel state information, which is performed by a network device and includes: acquiring the channel state information reported by a terminal. The channel state information includes a measurement result of a measurement based on at least one channel measurement resource CMR, and the measurement result includes a precoding matrix indicator PMI shared by the at least one CMR.

In an implementation, each CMR of the at least one CMR corresponds to a CMR resource set, and at least two different CMRs correspond to different CMR resource sets.

In an implementation, the CMR resource set corresponds to a resource parameter, the resource parameter includes one or more of a pool index of a control resource set, a transmission and reception point, or a remote radio header, and different CMR resource sets correspond to different resource parameters.

In an implementation, the PMI includes one or more PMI feedback parameters.

In an implementation, a phase offset exists between V matrices corresponding to at least two CMRs of the at least one CMR, and the one or more PMI feedback parameters are carried in an X1 information field and/or an X2 information field; the X1 information field is configured to carry a first wideband PMI feedback parameter, and the X2 information field is configured to carry a second wideband PMI feedback parameter or a narrowband PMI feedback parameter.

In an implementation, the first wideband PMI feedback parameter carried in the X1 information field includes a first group of PMI feedback parameters; and the first group of PMI feedback parameters include at least one of: a first PMI feedback parameter, which is determined based on a number of antenna ports in a first dimension and a number of oversamplings in a first dimension, or based on a number of antenna ports in a first dimension and a number of beams in a first dimension; a second PMI feedback parameter, which is determined based on a number of antenna ports in a second dimension and a number of oversamplings in a second dimension, or based on a number of antenna ports in a second dimension and a number of beams in a second dimension; a third PMI feedback parameter, which is used to indicate a relative difference between other layers and a first layer in terms of the first PMI feedback parameter and/or the second PMI feedback parameter; or a fourth PMI feedback parameter, which indicates the phase offset between the V matrices corresponding to the at least two CMRs of the at least one CMR.

In an implementation, the first group of PMI feedback parameters include the first PMI feedback parameter, and first PMI feedback parameters corresponding to at least two CMRs of the at least one CMR are the same; and/or the first group of PMI feedback parameters include the second PMI feedback parameter, and second PMI feedback parameters corresponding to at least two CMRs of the at least one CMR are the same; and/or the first group of PMI feedback parameters include the third PMI feedback parameter, and third PMI feedback parameters corresponding to at least two CMRs of the at least one CMR are the same.

In an implementation, the second wideband PMI feedback parameter or the narrowband PMI feedback parameter carried in the X2 information field is used for at least one of: selecting a beam, determining a phase offset, indicating a position of a frequency-domain unit selected, or indicating a position of a nonzero coefficient.

In an implementation, the first wideband PMI feedback parameter carried in the X1 information field includes a second group of PMI feedback parameters; and the second group of PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; an eighth PMI feedback parameter, which indicates the phase offset between the V matrices corresponding to the at least two CMRs of the at least one CMR; or a ninth PMI feedback parameter, which is used for adjusting a relative magnitude of a wideband.

In an implementation, the second group of PMI feedback parameters include the fifth PMI feedback parameter, and fifth PMI feedback parameters corresponding to at least two CMRs of the at least one CMR are the same; and/or the second group of PMI feedback parameters include the sixth PMI feedback parameter, and sixth PMI feedback parameters corresponding to at least two CMRs of the at least one CMR are the same; and/or the second group of PMI feedback parameters include the seventh PMI feedback parameter, and seventh PMI feedback parameters corresponding to at least two CMRs of the at least one CMR are the same; and/or the second group of PMI feedback parameters include the ninth PMI feedback parameter, and ninth PMI feedback parameters corresponding to at least two CMRs of the at least one CMR are the same.

In an implementation, the second group of PMI feedback parameters include one sixth PMI feedback parameter or a plurality of sixth PMI feedback parameters. The one sixth PMI feedback parameter is determined based on the number of antenna ports in the first dimension, the number of antenna ports in the second dimension, and/or the number of beams selected, of a same transmission and reception point/radio remote head. The plurality of sixth PMI feedback parameters are determined based on the number of antenna ports in the first dimension of a plurality of different transmission and reception points/radio remote heads, the number of antenna ports in the second dimension of the plurality of different transmission and reception points/radio remote heads, and/or the number of beams selected of the plurality of different transmission and reception points/radio remote heads.

In an implementation, each of the at least one CMR corresponds to a different V matrix, and the one or more PMI feedback parameters are carried in an X1 information field or an X2 information field; the X1 information field is configured to carry a first wideband PMI feedback parameter, and the X2 information field is configured to carry a second wideband PMI feedback parameter or a narrowband PMI feedback parameter.

In an implementation, the first wideband PMI feedback parameter carried in the X1 information field includes: a first PMI feedback parameter, which is determined based on a number of antenna ports in a first dimension and a number of oversamplings in a first dimension, or based on a number of antenna ports in a first dimension and a number of beams in a first dimension; or a second PMI feedback parameter, which is determined based on a number of antenna ports in a second dimension and a number of oversamplings in a second dimension, or based on a number of antenna ports in a second dimension and a number of beams in a second dimension; or a third PMI feedback parameter, which is used to indicate a relative difference between other layers and a first layer in terms of the first PMI feedback parameter and/or the second PMI feedback parameter.

In an implementation, the second wideband PMI feedback parameter or the narrowband PMI feedback parameter carried in the X2 information field is used for selecting a beam or determining a phase offset.

In an implementation, the first wideband PMI feedback parameter carried in the X1 information field includes a plurality of different first PMI feedback parameters, and different first PMI feedback parameters correspond to different CMRs; or the first wideband PMI feedback parameter carried in the X1 information field includes a plurality of different second PMI feedback parameters, and different second PMI feedback parameters correspond to different CMRs; or the first wideband PMI feedback parameter carried in the X1 information field includes a plurality of different third PMI feedback parameters, and different third PMI feedback parameters correspond to different CMRs.

In an implementation, each of the at least one CMR corresponds to a different V matrix, and the one or more PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; or a ninth PMI feedback parameter, which is used for adjusting a relative magnitude of a wideband.

In an implementation, each of the at least one CMR corresponds to a different V matrix, and the one or more PMI feedback parameters include: a plurality of different fifth PMI feedback parameters, different fifth PMI feedback parameters corresponding to different CMRs; and/or a plurality of different sixth PMI feedback parameters, different sixth PMI feedback parameters corresponding to different CMRs; and/or a plurality of different seventh PMI feedback parameters, different seventh PMI feedback parameters corresponding to different CMRs; and/or a plurality of different ninth PMI feedback parameters, different ninth PMI feedback parameters corresponding to different CMRs.

According to a third aspect of embodiments of the present disclosure, there is provided an apparatus for reporting channel state information. The apparatus includes: a measuring unit configured to obtain the channel state information through a measurement based on at least one channel measurement resource CMR, and a reporting unit configured to report the channel state information. The channel state information includes a measurement result of the measurement based on the at least one CMR, and the measurement result includes a precoding matrix indicator PMI shared by the at least one CMR.

In an implementation, each CMR of the at least one CMR corresponds to a CMR resource set, and at least two different CMRs correspond to different CMR resource sets.

In an implementation, the CMR resource set corresponds to a resource parameter, the resource parameter includes one or more of a pool index of a control resource set, a transmission and reception point, or a remote radio header, and different CMR resource sets correspond to different resource parameters.

In an implementation, the PMI includes one or more PMI feedback parameters.

In an implementation, a phase offset exists between V matrices corresponding to at least two CMRs of the at least one CMR, and the one or more PMI feedback parameters are carried in an X1 information field and/or an X2 information field; the X1 information field is configured to carry a first wideband PMI feedback parameter, and the X2 information field is configured to carry a second wideband PMI feedback parameter or a narrowband PMI feedback parameter.

In an implementation, the first wideband PMI feedback parameter carried in the X1 information field includes a first group of PMI feedback parameters; and the first group of PMI feedback parameters include at least one of: a first PMI feedback parameter, which is determined based on a number of antenna ports in a first dimension and a number of oversamplings in a first dimension, or based on a number of antenna ports in a first dimension and a number of beams in a first dimension; a second PMI feedback parameter, which is determined based on a number of antenna ports in a second dimension and a number of oversamplings in a second dimension, or based on a number of antenna ports in a second dimension and a number of beams in a second dimension; a third PMI feedback parameter, which is used to indicate a relative difference between other layers and a first layer in terms of the first PMI feedback parameter and/or the second PMI feedback parameter; or a fourth PMI feedback parameter, which indicates the phase offset between the V matrices corresponding to the at least two CMRs of the at least one CMR.

In an implementation, the first group of PMI feedback parameters include the first PMI feedback parameter, and first PMI feedback parameters corresponding to at least two CMRs of the at least one CMR are the same; and/or the first group of PMI feedback parameters include the second PMI feedback parameter, and second PMI feedback parameters corresponding to at least two CMRs of the at least one CMR are the same; and/or the first group of PMI feedback parameters include the third PMI feedback parameter, and third PMI feedback parameters corresponding to at least two CMRs of the at least one CMR are the same.

In an implementation, the second wideband PMI feedback parameter or the narrowband PMI feedback parameter carried in the X2 information field is used for at least one of: selecting a beam, determining a phase offset, indicating a position of a frequency-domain unit selected, or indicating a position of a nonzero coefficient.

In an implementation, the first wideband PMI feedback parameter carried in the X1 information field includes a second group of PMI feedback parameters; and the second group of PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; an eighth PMI feedback parameter, which indicates the phase offset between the V matrices corresponding to the at least two CMRs of the at least one CMR; or a ninth PMI feedback parameter, which is used for adjusting a relative magnitude of a wideband.

In an implementation, the second group of PMI feedback parameters include the fifth PMI feedback parameter, and fifth PMI feedback parameters corresponding to at least two CMRs of the at least one CMR are the same; and/or the second group of PMI feedback parameters include the sixth PMI feedback parameter, and sixth PMI feedback parameters corresponding to at least two CMRs of the at least one CMR are the same; and/or the second group of PMI feedback parameters include the seventh PMI feedback parameter, and seventh PMI feedback parameters corresponding to at least two CMRs of the at least one CMR are the same; and/or the second group of PMI feedback parameters include the ninth PMI feedback parameter, and ninth PMI feedback parameters corresponding to at least two CMRs of the at least one CMR are the same.

In an implementation, the second group of PMI feedback parameters include one sixth PMI feedback parameter or a plurality of sixth PMI feedback parameters. The one sixth PMI feedback parameter is determined based on the number of antenna ports in the first dimension, the number of antenna ports in the second dimension, and/or the number of beams selected, of a same transmission and reception point/radio remote head. The plurality of sixth PMI feedback parameters are determined based on the number of antenna ports in the first dimension of a plurality of different transmission and reception points/radio remote heads, the number of antenna ports in the second dimension of the plurality of different transmission and reception points/radio remote heads, and/or the number of beams selected of the plurality of different transmission and reception points/radio remote heads.

In an implementation, each of the at least one CMR corresponds to a different V matrix, and the one or more PMI feedback parameters are carried in an X1 information field or an X2 information field. The X1 information field is configured to carry a first wideband PMI feedback parameter, and the X2 information field is configured to carry a second wideband PMI feedback parameter or a narrowband PMI feedback parameter.

In an implementation, each of the at least one CMR corresponds to a different V matrix, and the first wideband PMI feedback parameter carried in the X1 information field includes: a first PMI feedback parameter, which is determined based on a number of antenna ports in a first dimension and a number of oversamplings in a first dimension, or based on a number of antenna ports in a first dimension and a number of beams in a first dimension; or a second PMI feedback parameter, which is determined based on a number of antenna ports in a second dimension and a number of oversamplings in a second dimension, or based on a number of antenna ports in a second dimension and a number of beams in a second dimension; or a third PMI feedback parameter, which is used to indicate a relative difference between other layers and a first layer in terms of the first PMI feedback parameter and/or the second PMI feedback parameter.

In an implementation, each of the at least one CMR corresponds to a different V matrix, and the second wideband PMI feedback parameter or the narrowband PMI feedback parameter carried in the X2 information field is used for selecting a beam or determining a phase offset.

In an implementation, the first wideband PMI feedback parameter carried in the X1 information field includes a plurality of different first PMI feedback parameters, and different first PMI feedback parameters correspond to different CMRs; or the first wideband PMI feedback parameter carried in the X1 information field includes a plurality of different second PMI feedback parameters, and different second PMI feedback parameters correspond to different CMRs; or the first wideband PMI feedback parameter carried in the X1 information field includes a plurality of different third PMI feedback parameters, and different third PMI feedback parameters correspond to different CMRs.

In an implementation, each of the at least one CMR corresponds to a different V matrix, and the one or more PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; or a ninth PMI feedback parameter, which is used for adjusting a relative magnitude of a wideband.

In an implementation, each of the at least one CMR corresponds to a different V matrix, and the one or more PMI feedback parameters include: a plurality of different fifth PMI feedback parameters, different fifth PMI feedback parameters corresponding to different CMRs; and/or a plurality of different sixth PMI feedback parameters, different sixth PMI feedback parameters corresponding to different CMRs; and/or a plurality of different seventh PMI feedback parameters, different seventh PMI feedback parameters corresponding to different CMRs; and/or a plurality of different ninth PMI feedback parameters, different ninth PMI feedback parameters corresponding to different CMRs.

According to a fourth aspect of embodiments of the present disclosure, there is provided an apparatus for reporting channel state information. The apparatus includes: an acquiring unit configured to acquire the channel state information reported by a terminal. The channel state information includes a measurement result of a measurement based on at least one channel measurement resource CMR, and the measurement result includes a precoding matrix indicator PMI shared by the at least one CMR.

In an implementation, each CMR of the at least one CMR corresponds to a CMR resource set, and at least two different CMRs correspond to different CMR resource sets.

In an implementation, the CMR resource set corresponds to a resource parameter, the resource parameter includes one or more of a pool index of a control resource set, a transmission and reception point, or a remote radio header, and different CMR resource sets correspond to different resource parameters.

In an implementation, the PMI includes one or more PMI feedback parameters.

In an implementation, a phase offset exists between V matrices corresponding to at least two CMRs of the at least one CMR, and the one or more PMI feedback parameters are carried in an X1 information field and/or an X2 information field; the X1 information field is configured to carry a first wideband PMI feedback parameter, and the X2 information field is configured to carry a second wideband PMI feedback parameter or a narrowband PMI feedback parameter.

In an implementation, the first wideband PMI feedback parameter carried in the X1 information field includes a first group of PMI feedback parameters; and the first group of PMI feedback parameters include at least one of: a first PMI feedback parameter, which is determined based on a number of antenna ports in a first dimension and a number of oversamplings in a first dimension, or based on a number of antenna ports in a first dimension and a number of beams in a first dimension; a second PMI feedback parameter, which is determined based on a number of antenna ports in a second dimension and a number of oversamplings in a second dimension, or based on a number of antenna ports in a second dimension and a number of beams in a second dimension; a third PMI feedback parameter, which is used to indicate a relative difference between other layers and a first layer in terms of the first PMI feedback parameter and/or the second PMI feedback parameter; or a fourth PMI feedback parameter, which indicates the phase offset between the V matrices corresponding to the at least two CMRs of the at least one CMR.

In an implementation, the first group of PMI feedback parameters include the first PMI feedback parameter, and first PMI feedback parameters corresponding to at least two CMRs of the at least one CMR are the same; and/or the first group of PMI feedback parameters include the second PMI feedback parameter, and second PMI feedback parameters corresponding to at least two CMRs of the at least one CMR are the same; and/or the first group of PMI feedback parameters include the third PMI feedback parameter, and third PMI feedback parameters corresponding to at least two CMRs of the at least one CMR are the same.

In an implementation, the second wideband PMI feedback parameter or the narrowband PMI feedback parameter carried in the X2 information field is used for at least one of: selecting a beam, determining a phase offset, indicating a position of a frequency-domain unit selected, or indicating a position of a nonzero coefficient.

In an implementation, the first wideband PMI feedback parameter carried in the X1 information field includes a second group of PMI feedback parameters; and the second group of PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; an eighth PMI feedback parameter, which indicates the phase offset between the V matrices corresponding to the at least two CMRs of the at least one CMR; or a ninth PMI feedback parameter, which is used for adjusting a relative magnitude of a wideband.

In an implementation, the second group of PMI feedback parameters include the fifth PMI feedback parameter, and fifth PMI feedback parameters corresponding to at least two CMRs of the at least one CMR are the same; and/or the second group of PMI feedback parameters include the sixth PMI feedback parameter, and sixth PMI feedback parameters corresponding to at least two CMRs of the at least one CMR are the same; and/or the second group of PMI feedback parameters include the seventh PMI feedback parameter, and seventh PMI feedback parameters corresponding to at least two CMRs of the at least one CMR are the same; and/or the second group of PMI feedback parameters include the ninth PMI feedback parameter, and ninth PMI feedback parameters corresponding to at least two CMRs of the at least one CMR are the same.

In an implementation, the second group of PMI feedback parameters include one sixth PMI feedback parameter or a plurality of sixth PMI feedback parameters. The one sixth PMI feedback parameter is determined based on the number of antenna ports in the first dimension, the number of antenna ports in the second dimension, and/or the number of beams selected, of a same transmission and reception point/radio remote head. The plurality of sixth PMI feedback parameters are determined based on the number of antenna ports in the first dimension of a plurality of different transmission and reception points/radio remote heads, the number of antenna ports in the second dimension of the plurality of different transmission and reception points/radio remote heads, and/or the number of beams selected of the plurality of different transmission and reception points/radio remote heads.

In an implementation, each of the at least one CMR corresponds to a different V matrix, and the one or more PMI feedback parameters are carried in an X1 information field or an X2 information field; the X1 information field is configured to carry a first wideband PMI feedback parameter, and the X2 information field is configured to carry a second wideband PMI feedback parameter or a narrowband PMI feedback parameter.

In an implementation, the first wideband PMI feedback parameter carried in the X1 information field includes: a first PMI feedback parameter, which is determined based on a number of antenna ports in a first dimension and a number of oversamplings in a first dimension, or based on a number of antenna ports in a first dimension and a number of beams in a first dimension; or a second PMI feedback parameter, which is determined based on a number of antenna ports in a second dimension and a number of oversamplings in a second dimension, or based on a number of antenna ports in a second dimension and a number of beams in a second dimension; or a third PMI feedback parameter, which is used to indicate a relative difference between other layers and a first layer in terms of the first PMI feedback parameter and/or the second PMI feedback parameter.

In an implementation, the second wideband PMI feedback parameter or the narrowband PMI feedback parameter carried in the X2 information field is used for selecting a beam or determining a phase offset.

In an implementation, the first wideband PMI feedback parameter carried in the X1 information field includes a plurality of different first PMI feedback parameters, and different first PMI feedback parameters correspond to different CMRs; or the first wideband PMI feedback parameter carried in the X1 information field includes a plurality of different second PMI feedback parameters, and different second PMI feedback parameters correspond to different CMRs; or the first wideband PMI feedback parameter carried in the X1 information field includes a plurality of different third PMI feedback parameters, and different third PMI feedback parameters correspond to different CMRs.

In an implementation, each of the at least one CMR corresponds to a different V matrix, and the one or more PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; or a ninth PMI feedback parameter, which is used for adjusting a relative magnitude of a wideband.

In an implementation, each of the at least one CMR corresponds to a different V matrix, and the one or more PMI feedback parameters include: a plurality of different fifth PMI feedback parameters, different fifth PMI feedback parameters corresponding to different CMRs; and/or a plurality of different sixth PMI feedback parameters, different sixth PMI feedback parameters corresponding to different CMRs; and/or a plurality of different seventh PMI feedback parameters, different seventh PMI feedback parameters corresponding to different CMRs; and/or a plurality of different ninth PMI feedback parameters, different ninth PMI feedback parameters corresponding to different CMRs.

According to a fifth aspect of embodiments of the present disclosure, there is provided a device for reporting channel state information, which includes: a processor; and a memory for storing instructions executable by the processor. The processor is configured to perform the method for reporting channel state information as described in the first aspect or as described in any implementation of the first aspect.

According to a sixth aspect of embodiments of the present disclosure, there is provided a device for reporting channel state information, which includes: a processor; and a memory for storing instructions executable by the processor. The processor is configured to perform the method for reporting channel state information as described in the second aspect or as described in any implementation of the second aspect.

According to a seventh aspect of embodiments of the present disclosure, there is provided a storage medium having stored therein instructions that, when executed by a processor of a terminal, enable the terminal to perform the method for reporting channel state information as described in the first aspect or as described in any implementation of the first aspect.

According to an eighth aspect of embodiments of the present disclosure, there is provided a storage medium having stored therein instructions that, when executed by a processor of a network device, enable the network device to perform the method for reporting channel state information as described in the second aspect or as described in any implementation of the second aspect.

The technical solutions according to embodiments of the present disclosure may include the following beneficial effects: the channel state information includes the measurement result of the measurement based on at least one CMR, and the measurement result includes the PMI shared by the at least one CMR, realizing feedback of a joint PMI of the at least one CMR, which reduces signaling overhead and improves the performance of transmission based on multiple CMRs.

It is to be understood that both the foregoing general description and the following detailed description are illustrative and explanatory only and are not restrictive of the present disclosure.

## BRIEF DESCRIPTION OF THE DRAWINGS

The accompanying drawings, which are incorporated in and constitute a part of this description, illustrate embodiments consistent with the present disclosure and, together with the description, serve to explain the principles of the present disclosure.

FIG. 1 shows a schematic diagram of a wireless communication system according to an illustrative embodiment of the present disclosure.

FIG. 2 shows a schematic flowchart of a method for reporting CSI according to an illustrative embodiment of the present disclosure.

FIG. 3 shows a schematic flowchart of another method for reporting CSI according to an illustrative embodiment of the present disclosure.

FIG. 4 shows a schematic block diagram of an apparatus for reporting CSI according to an illustrative embodiment of the present disclosure.

FIG. 5 shows a schematic block diagram of another apparatus for reporting CSI according to an illustrative embodiment of the present disclosure.

FIG. 6 shows a schematic block diagram of a device for reporting CSI according to an illustrative embodiment of the present disclosure.

FIG. 7 shows a schematic block diagram of another device for reporting CSI according to an illustrative embodiment of the present disclosure.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with some aspects of the present disclosure as recited in the appended claims.

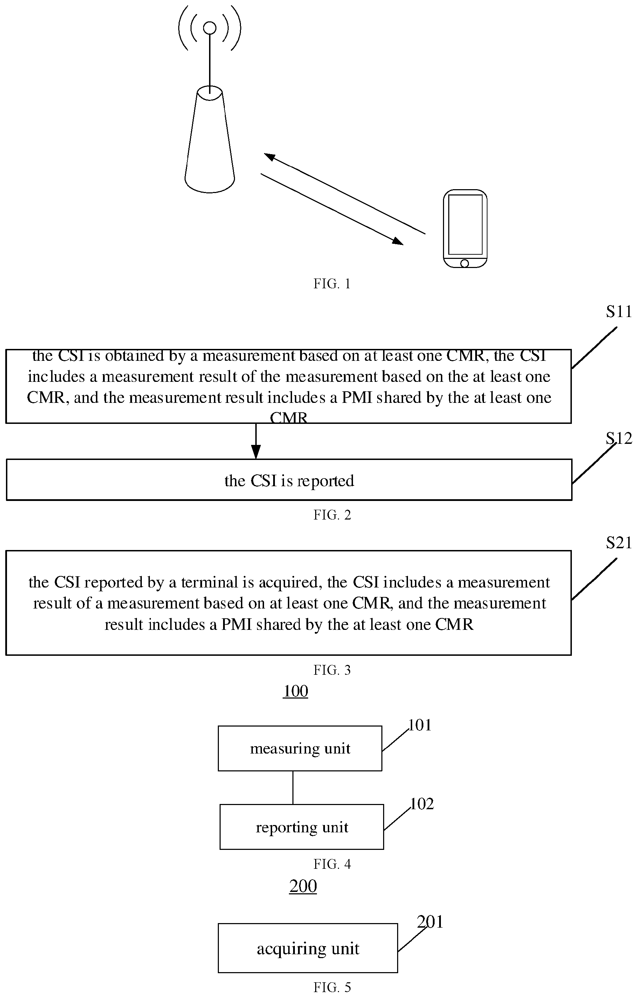

The method for reporting channel state information (CSI) according to embodiments of the present disclosure may be applied to a wireless communication system shown in FIG. 1. Referring to FIG. 1, the wireless communication system includes a terminal and a network device. The terminal is connected to the network device via a wireless resources, and transmits data to and receives data from the network device.

It can be understood that the wireless communication system shown in FIG. 1 is illustrative and explanatory, and the wireless communication system may also include other network devices, such as a core network device, a wireless relay device, a wireless backhaul device, etc., not shown in FIG. 1. The number of network devices and the number of terminals included in the wireless communication system are not limited in embodiments of the present disclosure.

It can be further understood that the wireless communication system in embodiments of the present disclosure is a network that provides a wireless communication function. The wireless communication systems may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency-division multiple access (SC-FDMA), carrier sense multiple access with collision avoidance. Networks may be classified into 2nd generation (2G) network, 3G network, 4G network or future evolution network, such as 5G network, also called new radio (NR) network, depending on the capacity, speed, delay and other factors of different networks. For convenience of description, in the present disclosure, the wireless communication network is referred to as a network sometimes for short.

Further, the network device involved in the present disclosure may also be referred to as a wireless access network device. The wireless access network device may be: a base station, an evolved node B (eNB), a home base station, an access point (AP) in a wireless fidelity (WIFI) system, a wireless relay node, a wireless backhaul node, a transmission point (TP) or a transmission and reception point (TRP), etc., and may also be a gNB in an NR system, or it may also be a component or a part of an equipment that constitutes a base station. When the wireless communication system is a vehicle-to-everything (V2X) communication system, the network device may also be a vehicle-mounted device. It should be understood that in embodiments of the present disclosure, the specific technology and specific device form adopted by the network device are not limited in embodiments of the present disclosure.

Further, the terminal involved in the present disclosure may also be referred to as a terminal device, a user equipment (UE), a mobile station (MS), a mobile terminal (MT), etc. The terminal is a device that provides a voice and/or data connectivity for a user. For example, the terminal may be a handheld device, a vehicle-mounted device, or the like that has a wireless connection function. At present, some examples of the terminal includes a smart phone, a pocket personal computer (PPC), a palmtop computer, a personal digital assistant (PDA), a notebook computer, a tablet computer, a wearable device, or a vehicle-mounted device, etc. In addition, when the wireless communication system is a vehicle-to-everything (V2X) communication system, the terminal device may also be a vehicle-mounted device. It should be understood that the specific technology and specific device form adopted by the terminal are not limited in embodiments of the present disclosure.

In the present disclosure, a data transmission between the network device and the terminal is performed based on a beam. During the beam-based data transmission, the network device (such as a base station) may configure a plurality of channel measurement resources (CMRs) to provide services for the terminal. The terminal may also perform a channel measurement based on a plurality of CMRs, and feed back channel state information (CSI). In related art, the terminal feeds back a precoding matrix indicator (PMI) for each of the plurality of CMRs separately. That is, when a plurality of CMRs are used, a plurality of PMIs need to be fed back separately. However, for the same terminal, channels of the plurality of CMRs are correlated, and feeding back the plurality of PMIs separately results in a large signaling overhead and a low transmission performance.

Embodiments of the present disclosure provide a method for reporting CSI. A terminal obtains the CSI through a measurement based on at least one CMR, the CSI includes a measurement result of the measurement based on the at least one CMR, and the measurement result includes a PMI shared by the at least one CMR. The terminal reports the CSI. A network device acquires the CSI that is reported by the terminal and includes the measurement result including the PMI shared by the at least one CMR. Embodiments of the present disclosure realize the joint transmission of PMIs of a plurality of CMRs, reduce the signaling overhead, and improve the transmission performance.

FIG. 2 shows a schematic flowchart of a method for reporting CSI according to an illustrative embodiment of the present disclosure, as shown in FIG. 2, the method for reporting CSI is performed by a terminal and includes the following steps.

In step S11, the CSI is obtained by a measurement based on at least one CMR. The CSI includes a measurement result of the measurement based on the at least one CMR, and the measurement result includes a PMI shared by the at least one CMR.

In step S12, the CSI is reported.

In embodiments of the present disclosure, the CSI reported by the terminal includes the measurement result of the measurement based on the at least one CMR, and the measurement result includes the PMI shared by the at least one CMR, thereby realizing the joint feedback of PMIs of a plurality of CMRs, reducing the signaling overhead, and improving the performance of transmission based on a plurality of CMRs.

In embodiments of the present disclosure, the at least one CMR for obtaining the CSI may include one or more CMR.

Each CMR of the at least one CMR involved in embodiments of the present disclosure corresponds to a CMR resource set, and different CMRs correspond to different CMR resource sets. The at least one CMR includes at least two different CMRs. The at least two different CMRs correspond to different CMR resource sets. The CMR set involved in embodiments of the present disclosure may be a CMR set configured by the network device, or may be a subset of a CMR set configured by the network device. That is, each CMR of the at least one CMR corresponds to a different CMR subset or a different CMR set.

In an implementation of embodiments of the present disclosure, the CMR resource set corresponding to each CMR of the at least one CMR corresponds to a resource parameter, the resource parameter includes one or more of a pool index (PoolIndex) of a control resource set (CORESET), a transmission and reception point (TRP), or a remote radio header (RRH).

In embodiments of the present disclosure, different CMR resource sets correspond to different resource parameters. It may be understood as that different CMRs correspond to different resource parameters, for example, different CMRs correspond to different TRPs. It can be further understood that the terminal may obtain the CSI through the measurement based on different TRPs, and the measurement result includes the PMI shared by different TRPs. For another example, different CMRs correspond to different RRHs. It can be further understood that the terminal may obtain the CSI through the measurement based on different RRHs, and the measurement result includes the PMI shared by different RRHs.

In embodiments of the present disclosure, the PMI shared by the at least one CMR may be understood as one PMI. The CSI includes the measurement result obtained by the measurement based on the at least one CMR and includes the one PMI.

In embodiments of the present disclosure, the one PMI included in the measurement result of the measurement based on the at least one CMR may be understood as a set of PMI feedback parameters. The set of PMI feedback parameters include one or more PMI feedback parameters. In the set of PMI feedback parameters, certain parameter(s) is/are the same for different CMRs, and certain parameter(s) is/are different for different CMRs.

Further, in embodiments of the present disclosure, the one or more PMI feedback parameters included in the measurement result of the measurement based on the at least one CMR may be determined based on V matrices corresponding to different CMRs.

In embodiments of the present disclosure, a V matrix is generated according to a U matrix. The U matrix may be expressed by the following formula:

$$
u_m = \begin{cases} \begin{bmatrix} 1 & e^{j\frac{2\pi m}{O_2 N_2}} & \cdots & e^{j\frac{2\pi m(N_2-1)}{O_2 N_2}} \end{bmatrix} & N_2 > 1 \\ \\ 1 & N_2 = 1 \end{cases}
$$

$$
v_{l,m} = \begin{bmatrix} u_m & e^{j\frac{2\pi l}{O_1 N_1}} u_m & \cdots & e^{j\frac{2\pi l(N_1-1)}{O_1 N_1}} u_m \end{bmatrix}^T
$$

where $N_2$ in the U matrix is a number of antenna ports in a second dimension, $O_2$ is a number of oversamplings in a second dimension, $N_1$ is a number of antenna ports in a first dimension, and $O_1$ is a number of oversamplings in a first dimension, and $L$ refers to a number of layers. Therefore, a V matrix corresponding to a CMR is related to the number of antenna ports in the first dimension, the number of antenna ports in the second dimension, the number of oversamplings in the first dimension, the number of oversamplings in the second dimension, and the number of layers.

In embodiments of the present disclosure, the V matrix may also be composed of a plurality column vectors, and in each column vector, only one element is 1, and other elements are all 0.

In embodiments of the present disclosure, the V matrix may also have other forms, which are not limited in the present disclosure.

In an implementation of embodiments of the present disclosure, a phase offset exists between V matrices corresponding to at least two CMRs of the at least one CMR for obtaining the CSI. That is, different V matrices may be determined through different phase offsets. At least two different CMRs correspond to different CMR subsets or different CMR sets. Therefore, a phase offset exists between V matrices corresponding to different CMR subsets or different CMR sets. The one or more PMI feedback parameters are carried in an X1 information field and/or an X2 information field. The X1 information field is configured to carry a first wideband PMI feedback parameter, and the X2 information field is configured to carry a second wideband PMI feedback parameter or a narrowband PMI feedback parameter.

In embodiments of the present disclosure, the first wideband PMI feedback parameter carried in the X1 information field may include one or more groups of PMI feedback parameters. For convenience of description, in embodiments of the present disclosure, any two different groups of PMI feedback parameters included in the first wideband PMI feedback parameter carried in the X1 information field are referred to as a first group of PMI feedback parameters and a second group of PMI feedback parameters.

In an example, the first wideband PMI feedback parameter carried in the X1 information field includes the first group of PMI feedback parameters (Codebook index ii). The first group of PMI feedback parameters include at least one of the following items A-D.

A: a first PMI feedback parameter ($i_{1,1}$). The first PMI feedback parameter is determined based on a number of antenna ports in a first dimension and a number of oversamplings in a first dimension, or based on a number of antenna ports in a first dimension and a number of beams in a first dimension. That is, the $i_{1,1}$ is related to $N_1$ and $O_1$, where $N_1$ is the number of antenna ports in the first dimension, and $O_1$ is the number of oversamplings or the number of beams in the first dimension.

In embodiments of the present disclosure, the first PMI feedback parameter may be a parameter corresponding to a sampling position selected from $N_1*O_1$ sampling positions.

B: a second PMI feedback parameter ($i_{1,2}$). The second PMI feedback parameter is determined based on a number of antenna ports in a second dimension and a number of oversamplings in a second dimension, or based on a number of antenna ports in a second dimension and a number of beams in a second dimension. That is, the $i_{1,2}$ is related to $N_2$ and $O_2$, where $N_2$ is the number of antenna ports in the second dimension, and $O_2$ is the number of oversamplings or the number of beams in the second dimension.

In embodiments of the present disclosure, the second PMI feedback parameter may be a parameter corresponding to a sampling position selected from $N_2*O_2$ sampling positions.

C: a third PMI feedback parameter ($i_{1,3}$). The third PMI feedback parameter is used to indicate a relative difference between other layers and a first layer in terms of the first PMI feedback parameter and/or the second PMI feedback parameter. The third PMI feedback parameter is mainly direct at a case where RANK>1, i.e., the case where the number of layers is greater than 1, and is mainly used for determining antenna ports between different layers.

D: a fourth PMI feedback parameter ($i_{1,4}$). The fourth PMI feedback parameter indicates the phase offset between the V matrices corresponding to the at least two CMRs of the at least one CMR.

The $i_{1,4}$ is used for adjusting a relative phase between different CMR subsets or different CMR sets. In an example, the $i_{1,4}$ includes at least one of: $i_{1,4,1}$, $i_{1,4,2}$, or $i_{1,4,3}$, where the $i_{1,4,1}$ represents a phase of layer 1, the $i_{1,4,2}$ represents a phase offset of layer 2 relative to the layer 1, and the $i_{1,4,3}$ represent a phase offset of layer 3 relative to the layer 1.

In embodiments of the present disclosure, the first group of PMI feedback parameters include the first PMI feedback parameter, and first PMI feedback parameters corresponding to at least two CMRs of the at least one CMR are the same. That is, for different CMR subsets or different CMR sets, the first PMI feedback parameters are the same. The V matrix is related to the first PMI feedback parameter.

In embodiments of the present disclosure, the first group of PMI feedback parameters include the second PMI feedback parameter, and second PMI feedback parameters corresponding to at least two CMRs of the at least one CMR are the same. That is, for different CMR subsets or different CMR sets, the second PMI feedback parameters are the same. The V matrix is related to the second PMI feedback parameter.

In embodiments of the present disclosure, the first group of PMI feedback parameters include the third PMI feedback parameter, and third PMI feedback parameters corresponding to at least two CMRs of the at least one CMR are the same. That is, for different CMR subsets or different CMR sets, the third PMI feedback parameters are the same. The V matrix is related to the third PMI feedback parameter.

In embodiments of the present disclosure, a phase offset exists between V matrices corresponding to at least two CMRs of the at least one CMR for obtaining the CSI. The second wideband PMI feedback parameter or the narrowband PMI feedback parameter carried in the X2 information field is used for at least one of: selecting a beam, determining a phase offset, indicating a position of a frequency-domain unit selected, or indicating a position of a nonzero coefficient.

The second wideband PMI feedback parameter or the narrowband PMI feedback parameter carried in the X2 information field may include at least one of $i_2$, $i_{2,0}$, $i_{2,1}$, $i_{2,2}$, ..., where $i_2$, $i_{2,0}$, $i_{2,1}$, $i_{2,2}$, ... may be understood as a 0th PMI feedback parameter, a 1st PMI feedback parameter, a 2nd PMI feedback parameter, a 3rd PMI feedback parameter, ..., carried in the X2 information field.

In another example of the present disclosure, a phase offset exists between V matrices corresponding to at least two CMRs of the at least one CMR for obtaining the CSI. The first wideband PMI feedback parameter carried in the X1 information field includes the second group of PMI feedback parameters (Codebook index ii). The second group of PMI feedback parameters include at least one of the following items A-E.

A: a fifth PMI feedback parameter (ii,i). The fifth PMI feedback parameter is determined based on a number of oversamplings in a first dimension/a number of beams in a first dimension, and a number of oversamplings in a second dimension/a number of beams in a second dimension. That is, the $i_{1,1}$ is related to $O_1$ and $O_2$, where $O_1$ is the number of oversamplings or the number of beams in the first dimension, and $O_2$ is the number of oversamplings or the number of beams in the second dimension.

B: a sixth PMI feedback parameter ($i_{1,2}$). The sixth PMI feedback parameter is determined based on a number of antenna ports in a first dimension, a number of antenna ports in a second dimension and/or a number of beams selected. That is, the $i_{1,2}$ is related to $N_2$, $N_2$ and $L$, where $N_1$ is the number of antenna ports in the first dimension, $N_2$ is the number of antenna ports in the second dimension, and $L$ is the number of beams selected.

In embodiments of the present disclosure, the second group of PMI feedback parameters include one sixth PMI feedback parameter or a plurality of sixth PMI feedback parameters.

The one sixth PMI feedback parameter is determined based on the number of antenna ports in the first dimension, the number of antenna ports in the second dimension, and/or the number of beams selected, of a same TRP/RRH.

The plurality of sixth PMI feedback parameters are determined based on the number of antenna ports in the first dimension of a plurality of different TRPs/RRHs, the number of antenna ports in the second dimension of the plurality of different TRPs/RRHs, and/or the number of beams selected of the plurality of different TRPs/RRHs.

In an example, when only one $L$ value is fed back, on the one hand, it is assumed that the $Ni$, $N_2$ and the selected $L$ of each of a plurality of TRPs/RRHs are the same, where the $N_1$ is the number of antenna ports in the first dimension at one of the plurality of TRPs/RRHs, the $N_2$ is the number of antenna ports in the second dimension at the same TRP/RRH, and $L$ represents $L$ beams selected from $N_1 * N_2$ beams. On the other hand, when only one $L$ value is fed back, the $N_1$ may be a sum of all antenna ports in the first dimension at the plurality of TRPs/RRHs, the $N_2$ may be a sum of all antenna ports in the second dimension at the plurality of TRPs/RRHs, and $L$ represents $L$ beams selected from $N_1 * N_2$ beams.

In embodiments of the present disclosure, there is no limitation on the number of beams selected for different TRPs/RRHs, and it may be L/N (N is the number of TRPs/RRHs), or different number of beams may be selected for different TRPs/RRHs.

C: a seventh PMI feedback parameter ($i_{1,3}$). The seventh PMI feedback parameter is used to indicate a relative difference between other layers and a first layer in terms of the fifth PMI feedback parameter and/or the sixth PMI feedback parameter. The third PMI feedback parameter is mainly direct at a case where RANK>1, i.e., the case where the number of layers is greater than 1, and is mainly used for determining antenna ports between different layers.

D: an eighth PMI feedback parameter ($i_{1,4}$). The eighth PMI feedback parameter indicates the phase offset between the V matrices corresponding to the at least two CMRs of the at least one CMR. The eighth PMI feedback parameter indicates the phase offset between the V matrices corresponding to the at least two CMRs of the at least one CMR.

The $i_{1,4}$ is used for adjusting a relative phase between different CMR subsets or different CMR sets. In an example, the $i_{1,4}$ includes at least one of: $i_{1,4,1}$, $i_{1,4,2}$, or $i_{1,4,3}$, where the $i_{1,4,1}$ represents a phase of layer 1, the $i_{1,4,2}$ represents a phase offset of layer 2 relative to the layer 1, and the $i_{1,4,3}$ represents a phase offset of layer 3 relative to the layer 1.

E: a ninth PMI feedback parameter ($i_{1,5}$). The ninth PMI feedback parameter is used for adjusting a relative magnitude of a wideband.

In an implementation, the second group of PMI feedback parameters include the fifth PMI feedback parameter, and fifth PMI feedback parameters corresponding to at least two CMRs of the at least one CMR are the same. That is, for different CMR subsets or different CMR sets, the fifth PMI feedback parameters are the same. The V matrix is related to the fifth PMI feedback parameter.

In an implementation, the second group of PMI feedback parameters include the sixth PMI feedback parameter, and sixth PMI feedback parameters corresponding to at least two CMRs of the at least one CMR are the same. That is, for different CMR subsets or different CMR sets, the sixth PMI feedback parameters are the same. The V matrix is related to the sixth PMI feedback parameter.

In an implementation, the second group of PMI feedback parameters include the seventh PMI feedback parameter, and seventh PMI feedback parameters corresponding to at least two CMRs of the at least one CMR are the same. That is, for different CMR subsets or different CMR sets, the seventh PMI feedback parameters are the same. The V matrix is related to the seventh PMI feedback parameter.

In an implementation, the second group of PMI feedback parameters include the ninth PMI feedback parameter, and ninth PMI feedback parameters corresponding to at least two CMRs of the at least one CMR are the same. That is, for different CMR subsets or different CMR sets, the fifth PMI feedback parameters are the same. The V matrix is related to the ninth PMI feedback parameter.

In embodiments of the present disclosure, a phase offset exists between V matrices corresponding to at least two CMRs of the at least one CMR for obtaining the CSI. The second wideband PMI feedback parameter or the narrowband PMI feedback parameter carried in the X2 information field is used for at least one of: selecting a beam, determining a phase offset, indicating a position of a frequency-domain unit selected, or indicating a position of a nonzero coefficient.

The second wideband PMI feedback parameter or the narrowband PMI feedback parameter carried in the X2 information field may include at least one of $i_2$, $i_{2,0}$, $i_{2,1}$, $i_{2,2}$, ..., where $i_2$, $i_{2,0}$, $i_{2,1}$, $i_{2,2}$, ... may be understood as a $0^{th}$ PMI

feedback parameter, a 1st PMI feedback parameter, a 2nd PMI feedback parameter, a 3rd PMI feedback parameter, ..., carried in the X2 information field.

The second wideband PMI feedback parameter or the narrowband PMI feedback parameter carried in the X2 information field may include the position of the frequency-domain unit selected for feedback, which may be referred to as $i_{1,6}$. For different CMR subsets or different CMR sets, the parameters $i_{1,6}$ are fed back uniformly (that is, the parameters $i_{1,6}$ are the same) or fed back separately.

The second wideband PMI feedback parameter or the narrowband PMI feedback parameter carried in the X2 information field may include an indication of the position of the nonzero coefficient, which may be referred to as $i_{1,7}$. For different CMR subsets or different CMR sets, the parameters $i_{1,7}$ are fed back uniformly (that is, the parameters $i_{1,7}$ are the same) or fed back separately.

In another implementation of embodiments of the present disclosure, the V matrices corresponding to the at least two CMRs of the at least one CMR for obtaining the CSI are different. V matrices are different, including a case where V matrices corresponding to different CMRs can be determined according to the phase offset, or a case where V matrices corresponding to different CMRs cannot be determined according to information like as the phase offset. The one or more PMI feedback parameters are carried in the X1 information field or the X2 information field. The X1 information field is used to carry the first wideband PMI feedback parameter, and the X2 information field is used to carry the second wideband PMI feedback parameter or the narrowband PMI feedback parameter.

In an embodiment, the first wideband PMI feedback parameter carried in the X1 information field includes at least one of the following items A, B, and C, and at least one of the included PMI feedback parameters includes a plurality of feedbacks values.

A: a first PMI feedback parameter ($i_{1,1}$). The first PMI feedback parameter is determined based on the number of antenna ports in the first dimension and the number of oversamplings in the first dimension, or based on the number of antenna ports in the first dimension and the number of beams in the first dimension. That is, the $i_{1,1}$ is related to $N_1$ and $O_1$, where $N_1$ is the number of antenna ports in the first dimension, and $O_1$ is the number of oversamplings or the number of beams in the first dimension.

In embodiments of the present disclosure, the first PMI feedback parameter may be a parameter corresponding to a sampling position selected from $N_1 * O_1$ sampling positions.

B: a second PMI feedback parameter ($i_{1,2}$). The second PMI feedback parameter is determined based on the number of antenna ports in the second dimension and the number of oversamplings in the second dimension, or based on the number of antenna ports in the second dimension and the number of beams in the second dimension. That is, the $i_{1,2}$ is related to $N_2$ and $O_2$, where $N_2$ is the number of antenna ports in the second dimension, and $O_2$ is the number of oversamplings or the number of beams in the second dimension.

In embodiments of the present disclosure, the second PMI feedback parameter may be a parameter corresponding to a sampling position selected from $N_2 * O_2$ sampling positions.

C: a third PMI feedback parameter ($i_{1,3}$). The third PMI feedback parameter is used to indicate a relative difference between other layers and a first layer in terms of the first PMI feedback parameter and/or the second PMI feedback parameter. The third PMI feedback parameter is mainly direct at a case where RANK>1, i.e., the case where the number of layers is greater than 1, and is mainly used for determining antenna ports between different layers.

In an implementation, each of the at least one CMR corresponds to a different V matrix, and the first wideband PMI feedback parameter carried in the X1 information field includes a plurality of different first PMI feedback parameters, and different first PMI feedback parameters correspond to different CMRs; and/or the first wideband PMI feedback parameter carried in the X1 information field includes a plurality of different second PMI feedback parameters, and different second PMI feedback parameters correspond to different CMRs; and/or the first wideband PMI feedback parameter carried in the X1 information field includes a plurality of different third PMI feedback parameters, and different third PMI feedback parameters correspond to different CMRs.

In embodiments of the present disclosure, in the PMI feedback parameter including a plurality of feedback values, different feedback values correspond to different CMR subsets or different CMR sets, i.e., correspond to different CORESETPoolindexes or different TRPs or different RRHs.

In another implementation, each of the at least one CMR corresponds to a different V matrix, the first wideband PMI feedback parameter carried in the X1 information field includes at least one of the following items A, B, C, and E, and at least one of the included PMI feedback parameters includes a plurality of feedbacks values.

A: a fifth PMI feedback parameter (ii,i). The fifth PMI feedback parameter is determined based on a number of oversamplings in a first dimension/a number of beams in a first dimension, and a number of oversamplings in a second dimension/a number of beams in a second dimension. That is, the $i_{1,1}$ is related to $O_1$ and $O_2$, where $O_1$ is the number of oversamplings or the number of beams in the first dimension, and $O_2$ is the number of oversamplings or the number of beams in the second dimension.

B: a sixth PMI feedback parameter ($i_{1,2}$). The sixth PMI feedback parameter is determined based on a number of antenna ports in a first dimension, a number of antenna ports in a second dimension and/or a number of beams selected.

That is, the $i_{1,2}$ is related to $N_2$, $N_2$ and $L$, where $N_1$ is the number of antenna ports in the first dimension, $N_2$ is the number of antenna ports in the second dimension, and $L$ is the number of beams selected.

In embodiments of the present disclosure, the second group of PMI feedback parameters include one sixth PMI feedback parameter or a plurality of sixth PMI feedback parameters.

The one sixth PMI feedback parameter is determined based on the number of antenna ports in the first dimension, the number of antenna ports in the second dimension, and/or the number of beams selected, of a same TRP/RRH. When only one $L$ value is fed back, it is assumed that the $N_1$, $N_2$ and the selected $L$ of each of a plurality of TRPs/RRHs are the same, where the $N_1$ is the number of antenna ports in the first dimension at one of the plurality of TRPs/RRHs, the $N_2$ is the number of antenna ports in the second dimension at the same TRP/RRH, and $L$ represents $L$ beams selected from $N_1*N_2$ beams.

The plurality of sixth PMI feedback parameters are determined based on the number of antenna ports in the first dimension of a plurality of different TRPs/RRHs, the number of antenna ports in the second dimension of the plurality of different TRPs/RRHs, and/or the number of beams selected of the plurality of different TRPs/RRHs. When only one $L$ value is fed back, the $N_1$ may be a sum of all antenna ports in the first dimension at the plurality of TRPs/RRHs, the $N_2$ may be a sum of all antenna ports in the second dimension at the plurality of TRPs/RRHs, and $L$ represents $L$ beams selected from $N_1*N_2$ beams.

In embodiments of the present disclosure, there is no limitation on the number of beams selected for different TRPs/RRHs, and it may be L/N (N is the number of TRPs/RRHs), or different number of beams may be selected for different TRPs/RRHs.

C: a seventh PMI feedback parameter ($i_{1,3}$). The seventh PMI feedback parameter is used to indicate a relative difference between other layers and a first layer in terms of the fifth PMI feedback parameter and/or the sixth PMI feedback parameter. The third PMI feedback parameter is mainly direct at a case where RANK>1, i.e., the case where the number of layers is greater than 1, and is mainly used for determining antenna ports between different layers.

E: a ninth PMI feedback parameter (ii,s). The ninth PMI feedback parameter is used for adjusting a relative magnitude of a wideband.

In an implementation, a plurality of different fifth PMI feedback parameters are included, and different fifth PMI feedback parameters correspond to different CMRs; and/or a plurality of different sixth PMI feedback parameters are included, different sixth PMI feedback parameters correspond to different CMRs; and/or a plurality of different seventh PMI feedback parameters are included, and different seventh PMI feedback parameters correspond to different CMRs; and/or a plurality of different ninth PMI feedback parameters are included, and different ninth PMI feedback parameters correspond to different CMRs.

Further, the V matrices corresponding to at least two CMRs of at least one CMR for obtaining the CSI are different, and the second wideband PMI feedback parameter or the narrowband PMI feedback parameter carried in the X2 information field is used for selecting a beam or determining a phase offset.

With the method for reporting CSI according to embodiments of the present disclosure, when the terminal performs communication transmissions based on a plurality of CMRs, for example, based on a plurality of CORESETPoolIndexes, a plurality of TRPs or a plurality of RRHs, the terminal can use the method for reporting the CSI involved in the above-mentioned embodiments to realize the joint PMI feedback for the plurality of CORESETPoolIndexes, the plurality of TRPs or the plurality of RRHs. Therefore, the method for feeding back the joint PMI according to embodiments of the present disclosure can reduce the signaling overhead and improve the performance of communication transmissions based on a plurality of CMRs, as compared with the separate feedback of each of PMIs.

Based on the above embodiments, embodiments of the present disclosure further provide a method for reporting CSI performed by a network device.

FIG. 3 shows a schematic flowchart of another method for reporting CSI according to an illustrative embodiment of the present disclosure, as shown in FIG. 3, the method for reporting the CSI is performed by a network device and includes a following step.

In step S21, the CSI reported by a terminal is acquired, the CSI includes a measurement result of a measurement based on at least one CMR, and the measurement result includes a PMI shared by the at least one CMR.

In an embodiment, each CMR of the at least one CMR corresponds to a CMR resource set, and at least two different CMRs correspond to different CMR resource sets.

The CMR set involved in embodiments of the present disclosure may be a CMR set configured by the network device, or may be a subset of a CMR set configured by the network device. That is, each CMR of the at least one CMR corresponds to a different CMR subset or a different CMR set.

In an implementation, the CMR resource set corresponds to a resource parameter, the resource parameter includes one or more of a CORESETPoolIndex, a TRP, or an RRH, and different CMR resource sets correspond to different resource parameters.

In embodiments of the present disclosure, different CMR resource sets correspond to different resource parameters. It may be understood as that different CMRs correspond to different resource parameters, for example, different CMRs correspond to different TRPs. It can be further understood that the terminal may obtain the CSI through the measurement based on different TRPs, and the measurement result includes the PMI shared by different TRPs. For another example, different CMRs correspond to different RRHs. It can be further understood that the terminal may obtain the CSI through the measurement based on different RRHs, and the measurement result includes the PMI shared by different RRHs.

In an implementation, the PMI includes one or more PMI feedback parameters. The one or more PMI feedback parameters may be understood as one or more PMI feedback parameters in a set of PMI feedback parameters. In the set of PMI feedback parameters, certain parameter(s) is/are the same for different CMRs, and certain parameter(s) is/are different for different CMRs.

In an implementation, a phase offset exists between V matrices corresponding to at least two CMRs of the at least one CMR for obtaining the CSI, and the one or more PMI feedback parameters are carried in an X1 information field and/or an X2 information field; the X1 information field is configured to carry a first wideband PMI feedback parameter, and the X2 information field is configured to carry a second wideband PMI feedback parameter or a narrowband PMI feedback parameter.

In an implementation, the first wideband PMI feedback parameter carried in the X1 information field includes a first group of PMI feedback parameters; and the first group of PMI feedback parameters include at least one of: a first PMI feedback parameter, which is determined based on a number of antenna ports in a first dimension and a number of oversamplings in a first dimension, or based on a number of antenna ports in a first dimension and a number of beams in a first dimension; a second PMI feedback parameter, which is determined based on a number of antenna ports in a second dimension and a number of oversamplings in a second dimension, or based on a number of antenna ports in a second dimension and a number of beams in a second dimension; a third PMI feedback parameter, which is used to indicate a relative difference between other layers and a first layer in terms of the first PMI feedback parameter and/or the second PMI feedback parameter; or a fourth PMI feedback parameter, which indicates the phase offset between the V matrices corresponding to the at least two CMRs of the at least one CMR.

The first group of PMI feedback parameters include the first PMI feedback parameter, and first PMI feedback parameters corresponding to at least two CMRs of the at least one CMR are the same; and/or the first group of PMI feedback parameters include the second PMI feedback parameter, and second PMI feedback parameters corresponding to at least two CMRs of the at least one CMR are the same; and/or the first group of PMI feedback parameters include the third PMI feedback parameter, and third PMI feedback parameters corresponding to at least two CMRs of the at least one CMR are the same.

In an implementation, a phase offset exists between V matrices corresponding to at least two CMRs of the at least one CMR for obtaining the CSI. The second wideband PMI feedback parameter or the narrowband PMI feedback parameter carried in the X2 information field is used for at least one of: selecting a beam, determining a phase offset, indicating a position of a frequency-domain unit selected, or indicating a position of a nonzero coefficient.

In an implementation, the first wideband PMI feedback parameter carried in the X1 information field includes a second group of PMI feedback parameters; and the second group of PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; an eighth PMI feedback parameter, which indicates the phase offset between the V matrices corresponding to the at least two CMRs of the at least one CMR; or a ninth PMI feedback parameter, which is used for adjusting a relative magnitude of a wideband.

In an implementation, the second group of PMI feedback parameters include the fifth PMI feedback parameter, and fifth PMI feedback parameters corresponding to at least two CMRs of the at least one CMR are the same; and/or the second group of PMI feedback parameters include the sixth PMI feedback parameter, and sixth PMI feedback parameters corresponding to at least two CMRs of the at least one CMR are the same; and/or the second group of PMI feedback parameters include the seventh PMI feedback parameter, and seventh PMI feedback parameters corresponding to at least two CMRs of the at least one CMR are the same; and/or the second group of PMI feedback parameters include the ninth PMI feedback parameter, and ninth PMI feedback parameters corresponding to at least two CMRs of the at least one CMR are the same.

In an implementation, the second group of PMI feedback parameters include one sixth PMI feedback parameter or a plurality of sixth PMI feedback parameters.

The one sixth PMI feedback parameter is determined based on the number of antenna ports in the first dimension, the number of antenna ports in the second dimension, and/or the number of beams selected, of a same TRP/RRH.

The plurality of sixth PMI feedback parameters are determined based on the number of antenna ports in the first dimension of a plurality of different TRPs/RRHs, the number of antenna ports in the second dimension of the plurality of different TRPs/RRHs, and/or the number of beams selected of the plurality of different TRPs/RRHs.

In an example, when only one $L$ value is fed back, on the one hand, it is assumed that the $N_1$, $N_2$ and the selected $L$ of each of a plurality of TRPs/RRHs are the same, where the $N_1$ is the number of antenna ports in the first dimension at one of the plurality of TRPs/RRHs, the $N_2$ is the number of antenna ports in the second dimension at the same TRP/RRH, and $L$ represents $L$ beams selected from $N_1*N_2$ beams. On the other hand, when only one $L$ value is fed back, the $N_1$ may be a sum of all antenna ports in the first dimension at the plurality of TRPs/RRHs, the $N_2$ may be a sum of all antenna ports in the second dimension at the plurality of TRPs/RRHs, and $L$ represents $L$ beams selected from $N_1*N_2$ beams.

In an implementation, each of the at least one CMR corresponds to a different V matrix, and the one or more PMI feedback parameters are carried in an X1 information field or an X2 information field; the X1 information field is configured to carry a first wideband PMI feedback parameter, and the X2 information field is configured to carry a second wideband PMI feedback parameter or a narrowband PMI feedback parameter.

In an implementation, each of the at least one CMR corresponds to a different V matrix, and the first wideband PMI feedback parameter carried in the X1 information field includes: a first PMI feedback parameter, which is determined based on a number of antenna ports in a first dimension and a number of oversamplings in a first dimension, or based on a number of antenna ports in a first dimension and a number of beams in a first dimension; or a second PMI feedback parameter, which is determined based on a number of antenna ports in a second dimension and a number of oversamplings in a second dimension, or based on a number of antenna ports in a second dimension and a number of beams in a second dimension; or a third PMI feedback parameter, which is used to indicate a relative difference between other layers and a first layer in terms of the first PMI feedback parameter and/or the second PMI feedback parameter.

In an implementation, each of the at least one CMR corresponds to a different V matrix, and the second wideband PMI feedback parameter or the narrowband PMI feedback parameter carried in the X2 information field is used for selecting a beam or determining a phase offset.

In an implementation, each of the at least one CMR corresponds to a different V matrix, and the first wideband PMI feedback parameter carried in the X1 information field includes a plurality of different first PMI feedback parameters, and different first PMI feedback parameters correspond to different CMRs; or the first wideband PMI feedback parameter carried in the X1 information field includes a plurality of different second PMI feedback parameters, and different second PMI feedback parameters correspond to different CMRs; or the first wideband PMI feedback parameter carried in the X1 information field includes a plurality of different third PMI feedback parameters, and different third PMI feedback parameters correspond to different CMRs.

In an implementation, each of the at least one CMR corresponds to a different V matrix, and the one or more PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; or a ninth PMI feedback parameter, which is used for adjusting a relative magnitude of a wideband.

In an implementation, each of the at least one CMR corresponds to a different V matrix, and the one or more PMI feedback parameters include: a plurality of different fifth PMI feedback parameters, different fifth PMI feedback parameters corresponding to different CMRs; and/or a plurality of different sixth PMI feedback parameters, different sixth PMI feedback parameters corresponding to different CMRs; and/or a plurality of different seventh PMI feedback parameters, different seventh PMI feedback parameters corresponding to different CMRs; and/or a plurality of different ninth PMI feedback parameters, different ninth PMI feedback parameters corresponding to different CMRs.

In embodiments of the present disclosure, the network device acquires the CSI reported by the terminal, and the CSI includes the measurement result including the PMI shared by at least one CMR. Embodiments of the present disclosure realize the joint transmission of PMIs of a plurality of CMRs, reduce the signaling overhead, and improve the transmission performance.

It should be noted that, in embodiments of the present disclosure, the implementations involved in some embodiments of the method for reporting CSI performed by the network device may refer to the relevant descriptions of the method for reporting CSI performed by the terminal, which will not be elaborated here.

It can be understood that the method for reporting CSI according to embodiments of the present disclosure is applicable to a reporting process of the CSI through the interaction between the terminal and the network device. For the method performed by the terminal and the method performed by the network device involved in the reporting process of the CSI through the interaction between the terminal and the network device, reference may be made to the relevant descriptions of the foregoing embodiments, which will not be elaborated here.

It should be further noted that those skilled in the art can understand that the various implementations/embodiments mentioned above in the present disclosure can be performed independently or in combination with each other.

Whether they are performed independently or in combination with each other, their implementation principles are similar. In the present disclosure, some embodiments are described in a combined manner as examples. Of course, those skilled in the art can understand that such examples for illustration are not restrictive to embodiments of the present disclosure.

Based on the same idea, embodiment of the present disclosure further provides an apparatus for reporting CSI.

It can be understood that, in order to realize the above functions, the apparatus for reporting CSI according to embodiments of the present disclosure includes corresponding hardware structures and/or software modules for performing various functions. In combination with the units and algorithm steps of various example disclosed in embodiments of the present disclosure, embodiments of the present disclosure may be implemented in the form of hardware or a combination of hardware and computer software. Whether a certain function is executed by hardware or computer software driving the hardware depends on specific applications and design constraints of the technical solution. Those skilled in the art may use different methods to implement the described functions for each specific application, but such implementation should not be regarded as beyond the scope of the technical solutions according to embodiments of the present disclosure.

FIG. 4 shows a schematic block diagram of an apparatus for reporting CSI according to an illustrative embodiment of the present disclosure. Referring to FIG. 4, the apparatus 100 for reporting CSI includes: a measuring unit 101 and a reporting unit 102.

The measuring unit 101 is configured to obtain the CSI through a measurement based on at least one CMR. The CSI includes a measurement result of the measurement based on the at least one CMR, and the measurement result includes a PMI shared by the at least one CMR. The reporting unit 102 is configured to report the CSI.

In an implementation, each CMR of the at least one CMR corresponds to a CMR resource set, and at least two different CMRs correspond to different CMR resource sets.

In an implementation, the CMR resource set corresponds to a resource parameter, the resource parameter includes one or more of a CORESETPoolIndex, a TRP, or an RRH, and different CMR resource sets correspond to different resource parameters.

In an implementation, the PMI includes one or more PMI feedback parameters.

In an implementation, a phase offset exists between V matrices corresponding to at least two CMRs of the at least one CMR, and the one or more PMI feedback parameters are carried in an X1 information field and/or an X2 information field. The X1 information field is configured to carry a first wideband PMI feedback parameter, and the X2 information field is configured to carry a second wideband PMI feedback parameter or a narrowband PMI feedback parameter.

In an implementation, the first wideband PMI feedback parameter carried in the X1 information field includes a first group of PMI feedback parameters. The first group of PMI feedback parameters include at least one of: a first PMI feedback parameter, which is determined based on a number of antenna ports in a first dimension and a number of oversamplings in a first dimension, or based on a number of antenna ports in a first dimension and a number of beams in a first dimension; a second PMI feedback parameter, which is determined based on a number of antenna ports in a second dimension and a number of oversamplings in a second dimension, or based on a number of antenna ports in a second dimension and a number of beams in a second dimension; a third PMI feedback parameter, which is used to indicate a relative difference between other layers and a first layer in terms of the first PMI feedback parameter and/or the second PMI feedback parameter; or a fourth PMI feedback parameter, which indicates the phase offset between the V matrices corresponding to the at least two CMRs of the at least one CMR.

In an implementation, the first group of PMI feedback parameters include the first PMI feedback parameter, and first PMI feedback parameters corresponding to at least two CMRs of the at least one CMR are the same; and/or the first group of PMI feedback parameters include the second PMI feedback parameter, and second PMI feedback parameters corresponding to at least two CMRs of the at least one CMR are the same; and/or the first group of PMI feedback parameters include the third PMI feedback parameter, and third PMI feedback parameters corresponding to at least two CMRs of the at least one CMR are the same.

In an implementation, the second wideband PMI feedback parameter or the narrowband PMI feedback parameter carried in the X2 information field is used for at least one of: selecting a beam, determining a phase offset, indicating a position of a frequency-domain unit selected, or indicating a position of a nonzero coefficient.

In an implementation, the first wideband PMI feedback parameter carried in the X1 information field includes a second group of PMI feedback parameters.

The second group of PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; an eighth PMI feedback parameter, which indicates the phase offset between the V matrices corresponding to the at least two CMRs of the at least one CMR; or a ninth PMI feedback parameter, which is used for adjusting a relative magnitude of a wideband.

In an implementation, the second group of PMI feedback parameters include the fifth PMI feedback parameter, and fifth PMI feedback parameters corresponding to at least two CMRs of the at least one CMR are the same; and/or the second group of PMI feedback parameters include the sixth PMI feedback parameter, and sixth PMI feedback parameters corresponding to at least two CMRs of the at least one CMR are the same; and/or the second group of PMI feedback parameters include the seventh PMI feedback parameter, and seventh PMI feedback parameters corresponding to at least two CMRs of the at least one CMR are the same; and/or the second group of PMI feedback parameters include the ninth PMI feedback parameter, and ninth PMI feedback parameters corresponding to at least two CMRs of the at least one CMR are the same.

In an implementation, the second group of PMI feedback parameters include one sixth PMI feedback parameter or a plurality of sixth PMI feedback parameters. The one sixth PMI feedback parameter is determined based on the number of antenna ports in the first dimension, the number of antenna ports in the second dimension, and/or the number of beams selected, of a same TRP/RRH.

The plurality of sixth PMI feedback parameters are determined based on the number of antenna ports in the first dimension of a plurality of different TRPs/RRHs, the number of antenna ports in the second dimension of the plurality of different TRPs/RRHs, and/or the number of beams selected of the plurality of different TRPs/RRHs.

In an implementation, each of the at least one CMR corresponds to a different V matrix, and the one or more PMI feedback parameters are carried in an X1 information field or an X2 information field. The X1 information field is configured to carry a first wideband PMI feedback parameter, and the X2 information field is configured to carry a second wideband PMI feedback parameter or a narrowband PMI feedback parameter.

In an implementation, each of the at least one CMR corresponds to a different V matrix, and the first wideband PMI feedback parameter carried in the X1 information field includes: a first PMI feedback parameter, which is determined based on a number of antenna ports in a first dimension and a number of oversamplings in a first dimension, or based on a number of antenna ports in a first dimension and a number of beams in a first dimension; or a second PMI feedback parameter, which is determined based on a number of antenna ports in a second dimension and a number of oversamplings in a second dimension, or based on a number of antenna ports in a second dimension and a number of beams in a second dimension; or a third PMI feedback parameter, which is used to indicate a relative difference between other layers and a first layer in terms of the first PMI feedback parameter and/or the second PMI feedback parameter.

In an implementation, each of the at least one CMR corresponds to a different V matrix, and the second wideband PMI feedback parameter or the narrowband PMI feedback parameter carried in the X2 information field is used for selecting a beam or determining a phase offset.

In an implementation, each of the at least one CMR corresponds to a different V matrix, and the first wideband PMI feedback parameter carried in the X1 information field includes a plurality of different first PMI feedback parameters, and different first PMI feedback parameters correspond to different CMRs; or the first wideband PMI feedback parameter carried in the X1 information field includes a plurality of different second PMI feedback parameters, and different second PMI feedback parameters correspond to different CMRs; or the first wideband PMI feedback parameter carried in the X1 information field includes a plurality of different third PMI feedback parameters, and different third PMI feedback parameters correspond to different CMRs.

In an implementation, each of the at least one CMR corresponds to a different V matrix, and the one or more PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; or a ninth PMI feedback parameter, which is used for adjusting a relative magnitude of a wideband.

In an implementation, each of the at least one CMR corresponds to a different V matrix, and the one or more PMI feedback parameters include: a plurality of different fifth PMI feedback parameters, different fifth PMI feedback parameters corresponding to different CMRs; and/or a plurality of different sixth PMI feedback parameters, different sixth PMI feedback parameters corresponding to different CMRs; and/or a plurality of different seventh PMI feedback parameters, different seventh PMI feedback parameters corresponding to different CMRs; and/or a plurality of different ninth PMI feedback parameters, different ninth PMI feedback parameters corresponding to different CMRs.

FIG. 5 shows a schematic block diagram of an apparatus for reporting CSI according to an illustrative embodiment of the present disclosure. Referring to FIG. 5, the apparatus 200 includes an acquiring unit 201.

The acquiring unit 201 is configured to acquire the CSI reported by a terminal, the CSI includes a measurement result of a measurement based on at least one CMR, and the measurement result includes a PMI shared by the at least one CMR.

In an implementation, each CMR of the at least one CMR corresponds to a CMR resource set, and at least two different CMRs correspond to different CMR resource sets.

In an implementation, the CMR resource set corresponds to a resource parameter, the resource parameter includes one or more of a CORESETPoolIndex, a TRP or an RRH, and different CMR resource sets correspond to different resource parameters.

In an implementation, the PMI includes one or more PMI feedback parameters.

In an implementation, a phase offset exists between V matrices corresponding to at least two CMRs of the at least one CMR, and the one or more PMI feedback parameters are carried in an X1 information field and/or an X2 information field. The X1 information field is configured to carry a first wideband PMI feedback parameter, and the X2 information field is configured to carry a second wideband PMI feedback parameter or a narrowband PMI feedback parameter.

In an implementation, the first wideband PMI feedback parameter carried in the X1 information field includes a first group of PMI feedback parameters. The first group of PMI feedback parameters include at least one of: a first PMI feedback parameter, which is determined based on a number of antenna ports in a first dimension and a number of oversamplings in a first dimension, or based on a number of antenna ports in a first dimension and a number of beams in a first dimension; a second PMI feedback parameter, which is determined based on a number of antenna ports in a second dimension and a number of oversamplings in a second dimension, or based on a number of antenna ports in a second dimension and a number of beams in a second dimension; a third PMI feedback parameter, which is used to indicate a relative difference between other layers and a first layer in terms of the first PMI feedback parameter and/or the second PMI feedback parameter; or a fourth PMI feedback parameter, which indicates the phase offset between the V matrices corresponding to the at least two CMRs of the at least one CMR.

In an implementation, the first group of PMI feedback parameters include the first PMI feedback parameter, and first PMI feedback parameters corresponding to at least two CMRs of the at least one CMR are the same; and/or the first group of PMI feedback parameters include the second PMI feedback parameter, and second PMI feedback parameters corresponding to at least two CMRs of the at least one CMR are the same; and/or the first group of PMI feedback parameters include the third PMI feedback parameter, and third PMI feedback parameters corresponding to at least two CMRs of the at least one CMR are the same.

In an implementation, the second wideband PMI feedback parameter or the narrowband PMI feedback parameter carried in the X2 information field is used for at least one of: selecting a beam, determining a phase offset, indicating a position of a frequency-domain unit selected, or indicating a position of a nonzero coefficient.

In an implementation, the first wideband PMI feedback parameter carried in the X1 information field includes a second group of PMI feedback parameters. The second group of PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; an eighth PMI feedback parameter, which indicates the phase offset between the V matrices corresponding to the at least two CMRs of the at least one CMR; or a ninth PMI feedback parameter, which is used for adjusting a relative magnitude of a wideband.

In an implementation, the second group of PMI feedback parameters include the fifth PMI feedback parameter, and fifth PMI feedback parameters corresponding to at least two CMRs of the at least one CMR are the same; and/or the second group of PMI feedback parameters include the sixth PMI feedback parameter, and sixth PMI feedback parameters corresponding to at least two CMRs of the at least one CMR are the same; and/or the second group of PMI feedback parameters include the seventh PMI feedback parameter, and seventh PMI feedback parameters corresponding to at least two CMRs of the at least one CMR are the same; and/or the second group of PMI feedback parameters include the ninth PMI feedback parameter, and ninth PMI feedback parameters corresponding to at least two CMRs of the at least one CMR are the same.

In an implementation, the second group of PMI feedback parameters include one sixth PMI feedback parameter or a plurality of sixth PMI feedback parameters. The one sixth PMI feedback parameter is determined based on the number of antenna ports in the first dimension, the number of antenna ports in the second dimension, and/or the number of beams selected, of a same TRP/RRH.

The plurality of sixth PMI feedback parameters are determined based on the number of antenna ports in the first dimension of a plurality of different TRPs/RRHs, the number of antenna ports in the second dimension of the plurality of different TRPs/RRHs, and/or the number of beams selected of the plurality of different TRPs/RRHs.

In an implementation, each of the at least one CMR corresponds to a different V matrix, and the one or more PMI feedback parameters are carried in an X1 information field or an X2 information field. The X1 information field is configured to carry a first wideband PMI feedback parameter, and the X2 information field is configured to carry a second wideband PMI feedback parameter or a narrowband PMI feedback parameter.

In an implementation, each of the at least one CMR corresponds to a different V matrix, and the first wideband PMI feedback parameter carried in the X1 information field includes: a first PMI feedback parameter, which is determined based on a number of antenna ports in a first dimension and a number of oversamplings in a first dimension, or based on a number of antenna ports in a first dimension and a number of beams in a first dimension; or a second PMI feedback parameter, which is determined based on a number of antenna ports in a second dimension and a number of oversamplings in a second dimension, or based on a number of antenna ports in a second dimension and a number of beams in a second dimension; or a third PMI feedback parameter, which is used to indicate a relative difference between other layers and a first layer in terms of the first PMI feedback parameter and/or the second PMI feedback parameter.

In an implementation, each of the at least one CMR corresponds to a different V matrix, and the second wideband PMI feedback parameter or the narrowband PMI feedback parameter carried in the X2 information field is used for selecting a beam or determining a phase offset.

In an implementation, each of the at least one CMR corresponds to a different V matrix, and the first wideband PMI feedback parameter carried in the X1 information field includes a plurality of different first PMI feedback parameters, and different first PMI feedback parameters correspond to different CMRs; or the first wideband PMI feedback parameter carried in the X1 information field includes a plurality of different second PMI feedback parameters, and different second PMI feedback parameters correspond to different CMRs; or the first wideband PMI feedback parameter carried in the X1 information field includes a plurality of different third PMI feedback parameters, and different third PMI feedback parameters correspond to different CMRs.

In an implementation, each of the at least one CMR corresponds to a different V matrix, and the one or more PMI feedback parameters include at least one of: a fifth PMI feedback parameter, which is determined based on a number of oversamplings in a first dimension/a number of beams in a first dimension, and a number of oversamplings in a second dimension/a number of beams in a second dimension; a sixth PMI feedback parameter, which is determined based on a number of antenna ports in a first dimension, a number of antenna ports in a second dimension and/or a number of beams selected; a seventh PMI feedback parameter, which is used to indicate a relative difference between other layers and a first layer in terms of the fifth PMI feedback parameter and/or the sixth PMI feedback parameter; or a ninth PMI feedback parameter, which is used for adjusting a relative magnitude of a wideband.

In an implementation, each of the at least one CMR corresponds to a different V matrix, and the one or more PMI feedback parameters include: a plurality of different fifth PMI feedback parameters, different fifth PMI feedback parameters corresponding to different CMRs; and/or a plurality of different sixth PMI feedback parameters, different sixth PMI feedback parameters corresponding to different CMRs; and/or a plurality of different seventh PMI feedback parameters, different seventh PMI feedback parameters corresponding to different CMRs; and/or a plurality of different ninth PMI feedback parameters, different ninth PMI feedback parameters corresponding to different CMRs.

With respect to the apparatuses in the above embodiments, the specific manners of individual modules therein for performing operations have been described in detail in embodiments of the related methods, which will not be elaborated herein.

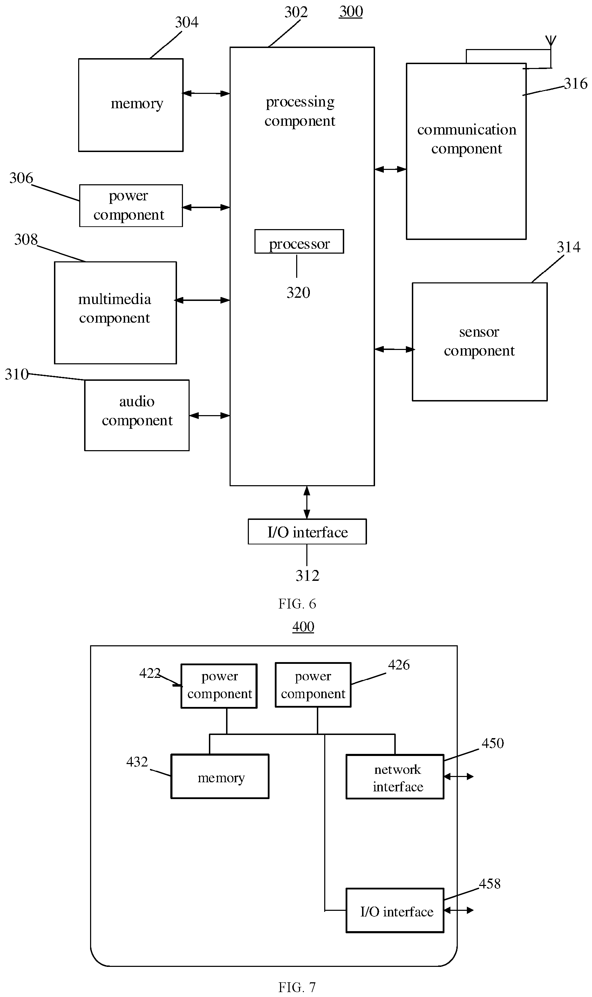

FIG. 6 shows a schematic block diagram of a device 300 for reporting CSI according to an illustrative embodiment of the present disclosure. The device 300 may be provided as the terminal involved above. For example, the device 300 may be a mobile phone, a computer, a digital broadcast terminal, a messaging device, a game console, a tablet device, a medical device, a fitness device, a personal digital assistant, or the like.

Referring to FIG. 6, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 can include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or nonvolatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 can access a wireless network based on a communication standard, such as Wi-Fi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method.

In illustrative embodiments, there is also provided a storage medium including instructions, such as a memory 304 including instructions, and the instructions are executable by the processor 320 in the device 300 for completing the above-mentioned method. For example, the non-transitory computer-readable storage medium may be an ROM, a random access memory (RAM), a CD-ROM, a magnetic tape, a floppy disc, an optical data storage device, and the like.

FIG. 7 shows a schematic block diagram of a device 400 for reporting CSI according to an illustrative embodiment of the present disclosure. For example, the device 400 may be provided as a network device. Referring to FIG. 7, the device 400 includes: a processing component 422 which further includes one or more processors, and a memory resource represented by a memory 432 for storing instructions executable by the processing component 422, such as application programs. The application program stored in the memory 432 may include one or more modules each corresponding to a set of instructions. In addition, the processing component 422 is configured to execute instructions, so as to perform the aforementioned method.

The device 400 may further include a power component 426 configured to perform power management of the device 400, a wired or wireless network interface 450 configured to connect the device 400 to a network, and an input-output (I/O) interface 458. The device 400 can operate based on an operating system stored in the memory 432, such as Windows Server™, Mac OS X™, Unix™, Linux™, FreeBSD™, or the like.

In illustrative embodiments, there is also provided a storage medium including instructions, such as a memory 432 including instructions, and the instructions are executable by the processor 422 in the device 400 for completing the above-mentioned method. For example, the non-transitory computer-readable storage medium may be an ROM, a random access memory (RAM), a CD-ROM, a magnetic tape, a floppy disc, an optical data storage device, and the like.

It can be further understood that the phrase "a plurality of" in the present disclosure refers to two or more, and other quantifiers are similar thereto. The term "and/or" describes an association relationship of associated objects, indicating that three relationships may exist, for example, the expression "A and/or B" may include the following three cases: A alone, B alone, and both A and B. The character "/" generally indicates an "or" relationship of the associated objects. The singular forms "alan", "said" and "the" are intended to include plural forms, unless clearly indicated in the context otherwise.

It may be further understood that, although terms such as "first," and "second" may be used for describing various information, these information should not be limited by these terms. These terms are only used for distinguishing information of the same type from each other, not indicating a specific order or degree of importance. In fact, the expressions such as "first", "second" and the like are interchangeable. For example, first information may also be referred to as second information, and similarly, second information may also be referred to as first information, without departing from the scope of embodiments of the present disclosure.

It can be further understood that in embodiments of the present disclosure, although operations are described in a specific order in the drawings, it should not be understood as that these operations are required to be performed in the specific order as shown or in a serial order, or that all operations as shown are required to be performed to obtain the desired result. In certain circumstances, multitasking and parallel processing may be advantageous.

Other embodiments of the present disclosure will be apparent to those skilled in the art from consideration of the specification and practice of the invention disclosed here. The present disclosure is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for reporting channel state information, performed by a terminal, comprising:

   obtaining the channel state information through a measurement based on at least one channel measurement resource CMR, wherein the channel state information comprises a measurement result of the measurement based on the at least one CMR, and the measurement result comprises a precoding matrix indicator PMI shared by the at least one CMR; and
   reporting the channel state information.

2. The method for reporting channel state information according to claim 1, wherein each CMR of the at least one CMR corresponds to a CMR resource set, and at least two different CMRs correspond to different CMR resource sets.

3. The method for reporting channel state information according to claim 2, wherein the CMR resource set corresponds to a resource parameter, the resource parameter comprises one or more of a pool index of a control resource set, a transmission and reception point, or a remote radio header, and different CMR resource sets correspond to different resource parameters.

4. The method for reporting channel state information according to any one of claims 1 to 3, wherein the PMI comprises one or more PMI feedback parameters.

5. The method for reporting channel state information according to claim 4, wherein a phase offset exists between V matrices corresponding to at least two CMRs of the at least one CMR, and the one or more PMI feedback parameters are carried in an X1 information field and/or an X2 information field;wherein the X1 information field is configured to carry a first wideband PMI feedback parameter, and the X2 information field is configured to carry a second wideband PMI feedback parameter or a narrowband PMI feedback parameter.

6. The method for reporting channel state information according to claim 5, wherein the first wideband PMI feedback parameter carried in the X1 information field comprises a first group of PMI feedback parameters; andthe first group of PMI feedback parameters comprise at least one of:

   a first PMI feedback parameter, wherein the first PMI feedback parameter is determined based on a number of antenna ports in a first dimension and a number of oversamplings in a first dimension, or based on a number of antenna ports in a first dimension and a number of beams in a first dimension;

a second PMI feedback parameter, wherein the second PMI feedback parameter is determined based on a number of antenna ports in a second dimension and a number of oversamplings in a second dimension, or based on a number of antenna ports in a second dimension and a number of beams in a second dimension;
a third PMI feedback parameter, wherein the third PMI feedback parameter is used to indicate a relative difference between other layers and a first layer in terms of the first PMI feedback parameter and/or the second PMI feedback parameter; or
a fourth PMI feedback parameter, wherein the fourth PMI feedback parameter indicates the phase offset between the V matrices corresponding to the at least two CMRs of the at least one CMR.

7. The method for reporting channel state information according to claim 6, wherein the first group of PMI feedback parameters comprise the first PMI feedback parameter, and first PMI feedback parameters corresponding to at least two CMRs of the at least one CMR are the same; and/or

the first group of PMI feedback parameters comprise the second PMI feedback parameter, and second PMI feedback parameters corresponding to at least two CMRs of the at least one CMR are the same; and/or
the first group of PMI feedback parameters comprise the third PMI feedback parameter, and third PMI feedback parameters corresponding to at least two CMRs of the at least one CMR are the same.

8. The method for reporting channel state information according to claim 5, wherein the second wideband PMI feedback parameter or the narrowband PMI feedback parameter carried in the X2 information field is used for at least one of: selecting a beam, determining a phase offset, indicating a position of a frequency-domain unit selected, or indicating a position of a nonzero coefficient.

9. The method for reporting channel state information according to claim 5, wherein the first wideband PMI feedback parameter carried in the X1 information field comprises a second group of PMI feedback parameters; and the second group of PMI feedback parameters comprise at least one of:

a fifth PMI feedback parameter, wherein the fifth PMI feedback parameter is determined based on a number of oversamplings in a first dimension/a number of beams in a first dimension, and a number of oversamplings in a second dimension/a number of beams in a second dimension;
a sixth PMI feedback parameter, wherein the sixth PMI feedback parameter is determined based on a number of antenna ports in a first dimension, a number of antenna ports in a second dimension and/or a number of beams selected;
a seventh PMI feedback parameter, wherein the seventh PMI feedback parameter is used to indicate a relative difference between other layers and a first layer in terms of the fifth PMI feedback parameter and/or the sixth PMI feedback parameter;
an eighth PMI feedback parameter, wherein the eighth PMI feedback parameter indicates the phase offset between the V matrices corresponding to the at least two CMRs of the at least one CMR; or
a ninth PMI feedback parameter, wherein the ninth PMI feedback parameter is used for adjusting a relative magnitude of a wideband.

10. The method for reporting channel state information according to claim 9, wherein

the second group of PMI feedback parameters comprise the fifth PMI feedback parameter, and fifth PMI feedback parameters corresponding to at least two CMRs of the at least one CMR are the same; and/or
the second group of PMI feedback parameters comprise the sixth PMI feedback parameter, and sixth PMI feedback parameters corresponding to at least two CMRs of the at least one CMR are the same; and/or
the second group of PMI feedback parameters comprise the seventh PMI feedback parameter, and seventh PMI feedback parameters corresponding to at least two CMRs of the at least one CMR are the same; and/or
the second group of PMI feedback parameters comprise the ninth PMI feedback parameter, and ninth PMI feedback parameters corresponding to at least two CMRs of the at least one CMR are the same.

11. The method for reporting channel state information according to claim 9, wherein the second group of PMI feedback parameters comprise one sixth PMI feedback parameter or a plurality of sixth PMI feedback parameters;

the one sixth PMI feedback parameter is determined based on the number of antenna ports in the first dimension, the number of antenna ports in the second dimension, and/or the number of beams selected, of a same transmission and reception point/radio remote head;

the plurality of sixth PMI feedback parameters are determined based on the number of antenna ports in the first dimension of a plurality of different transmission and reception points/radio remote heads, the number of antenna ports in the second dimension of the plurality of different transmission and reception points/radio remote heads, and/or the number of beams selected of the plurality of different transmission and reception points/radio remote heads.

12. The method for reporting channel state information according to claim 4, wherein each of the at least one CMR corresponds to a different V matrix, and the one or more PMI feedback parameters are carried in an X1 information field or an X2 information field;wherein the X1 information field is configured to carry a first wideband PMI feedback parameter, and the X2 information field is configured to carry a second wideband PMI feedback parameter or a narrowband PMI feedback parameter.

13. The method for reporting channel state information according to claim 12, wherein the first wideband PMI feedback parameter carried in the X1 information field comprises:

a first PMI feedback parameter, wherein the first PMI feedback parameter is determined based on a number of antenna ports in a first dimension and a number of oversamplings in a first dimension, or based on a number of antenna ports in a first dimension and a number of beams in a first dimension; or
a second PMI feedback parameter, wherein the second PMI feedback parameter is determined based on a number of antenna ports in a second dimension and a number of oversamplings in a second dimension, or based on a number of antenna ports in a second dimension and a number of beams in a second dimension; or
a third PMI feedback parameter, wherein the third PMI feedback parameter is used to indicate a relative difference between other layers and a first layer in terms of the first PMI feedback parameter and/or the second PMI feedback parameter

14. The method for reporting channel state information according to claim 12, wherein the second wideband PMI feedback parameter or the narrowband PMI feedback parameter carried in the X2 information field is used for selecting a beam or determining a phase offset.

15. The method for reporting channel state information according to claim 13, wherein the first wideband PMI feedback parameter carried in the X1 information field comprises a plurality of different first PMI feedback parameters, and different first PMI feedback parameters correspond to different CMRs; or

the first wideband PMI feedback parameter carried in the X1 information field comprises a plurality of different second PMI feedback parameters, and different second PMI feedback parameters correspond to different CMRs; or
the first wideband PMI feedback parameter carried in the X1 information field comprises a plurality of different third PMI feedback parameters, and different third PMI feedback parameters correspond to different CMRs.

16. The method for reporting channel state information according to claim 4, wherein each of the at least one CMR corresponds to a different V matrix, and the one or more PMI feedback parameters comprise at least one of:

a fifth PMI feedback parameter, wherein the fifth PMI feedback parameter is determined based on a number of oversamplings in a first dimension/a number of beams in a first dimension, and a number of oversamplings in a second dimension/a number of beams in a second dimension;
a sixth PMI feedback parameter, wherein the sixth PMI feedback parameter is determined based on a number of antenna ports in a first dimension, a number of antenna ports in a second dimension and/or a number of beams selected;
a seventh PMI feedback parameter, wherein the seventh PMI feedback parameter is used to indicate a relative difference between other layers and a first layer in terms of the fifth PMI feedback parameter and/or the sixth PMI feedback parameter; or
a ninth PMI feedback parameter, wherein the ninth PMI feedback parameter is used for adjusting a relative magnitude of a wideband.

17. The method for reporting channel state information according to claim 16, wherein the one or more PMI feedback parameters comprise:

a plurality of different fifth PMI feedback parameters, different fifth PMI feedback parameters corresponding to different CMRs; and/or
a plurality of different sixth PMI feedback parameters, different sixth PMI feedback parameters corresponding to different CMRs; and/or
a plurality of different seventh PMI feedback parameters, different seventh PMI feedback parameters corresponding to different CMRs; and/or
a plurality of different ninth PMI feedback parameters, different ninth PMI feedback parameters corresponding to different CMRs.

18. A method for reporting channel state information, performed by a network device, comprising:acquiring the channel state information reported by a terminal, wherein the channel state information comprises a measurement result of a measurement based on at least one channel measurement resource CMR, and the measurement result comprises a precoding matrix indicator PMI shared by the at least one CMR.

19. The method for reporting channel state information according to claim 18, wherein each CMR of the at least one CMR corresponds to a CMR resource set, and at least two different CMRs correspond to different CMR resource sets.

20. The method for reporting channel state information according to claim 19, wherein the CMR resource set corresponds to a resource parameter, the resource parameter comprises one or more of a pool index of a control resource set, a transmission and reception point, or a remote radio header, and different CMR resource sets correspond to different resource parameters.

21. The method for reporting channel state information according to any one of claims 18 to 20, wherein the PMI comprises one or more PMI feedback parameters.

22. The method for reporting channel state information according to claim 21, wherein a phase offset exists between V matrices corresponding to at least two CMRs of the at least one CMR, and the one or more PMI feedback parameters are carried in an X1 information field and/or an X2 information field;wherein the X1 information field is configured to carry a first wideband PMI feedback parameter, and the X2 information field is configured to carry a second wideband PMI feedback parameter or a narrowband PMI feedback parameter.

23. The method for reporting channel state information according to claim 22, wherein the first wideband PMI feedback parameter carried in the X1 information field comprises a first group of PMI feedback parameters; andthe first group of PMI feedback parameters comprise at least one of:

a first PMI feedback parameter, wherein the first PMI feedback parameter is determined based on a number of antenna ports in a first dimension and a number of oversamplings in a first dimension, or based on a number of antenna ports in a first dimension and a number of beams in a first dimension;
a second PMI feedback parameter, wherein the second PMI feedback parameter is determined based on a number of antenna ports in a second dimension and a number of oversamplings in a second dimension, or based on a number of antenna ports in a second dimension and a number of beams in a second dimension;
a third PMI feedback parameter, wherein the third PMI feedback parameter is used to indicate a relative difference between other layers and a first layer in terms of the first PMI feedback parameter and/or the second PMI feedback parameter; or
a fourth PMI feedback parameter, wherein the fourth PMI feedback parameter indicates the phase offset between the V matrices corresponding to the at least two CMRs of the at least one CMR.

24. The method for reporting channel state information according to claim 23, wherein the first group of PMI feedback parameters comprise the first PMI feedback parameter, and first PMI feedback parameters corresponding to at least two CMRs of the at least one CMR are the same; and/or

the first group of PMI feedback parameters comprise the second PMI feedback parameter, and second PMI feedback parameters corresponding to at least two CMRs of the at least one CMR are the same; and/or
the first group of PMI feedback parameters comprise the third PMI feedback parameter, and third PMI feedback parameters corresponding to at least two CMRs of the at least one CMR are the same.

25. The method for reporting channel state information according to claim 22, wherein the second wideband PMI feedback parameter or the narrowband PMI feedback parameter carried in the X2 information field is used for at least one of: selecting a beam, determining a phase offset, indicating a position of a frequency-domain unit selected, or indicating a position of a nonzero coefficient.

26. The method for reporting channel state information according to claim 22, wherein the first wideband PMI feedback parameter carried in the X1 information field comprises a second group of PMI feedback parameters; andthe second group of PMI feedback parameters comprise at least one of:

a fifth PMI feedback parameter, wherein the fifth PMI feedback parameter is determined based on a number of oversamplings in a first dimension/a number of beams in a first dimension, and a number of oversamplings in a second dimension/a number of beams in a second dimension;

a sixth PMI feedback parameter, wherein the sixth PMI feedback parameter is determined based on a number of antenna ports in a first dimension, a number of antenna ports in a second dimension and/or a number of beams selected;

a seventh PMI feedback parameter, wherein the seventh PMI feedback parameter is used to indicate a relative difference between other layers and a first layer in terms of the fifth PMI feedback parameter and/or the sixth PMI feedback parameter;

an eighth PMI feedback parameter, wherein the eighth PMI feedback parameter indicates the phase offset between the V matrices corresponding to the at least two CMRs of the at least one CMR; or

a ninth PMI feedback parameter, wherein the ninth PMI feedback parameter is used for adjusting a relative magnitude of a wideband.

27. The method for reporting channel state information according to claim 26, wherein

the second group of PMI feedback parameters comprise the fifth PMI feedback parameter, and fifth PMI feedback parameters corresponding to at least two CMRs of the at least one CMR are the same; and/or

the second group of PMI feedback parameters comprise the sixth PMI feedback parameter, and sixth PMI feedback parameters corresponding to at least two CMRs of the at least one CMR are the same; and/or

the second group of PMI feedback parameters comprise the seventh PMI feedback parameter, and seventh PMI feedback parameters corresponding to at least two CMRs of the at least one CMR are the same; and/or

the second group of PMI feedback parameters comprise the ninth PMI feedback parameter, and ninth PMI feedback parameters corresponding to at least two CMRs of the at least one CMR are the same.

28. The method for reporting channel state information according to claim 27, wherein the second group of PMI feedback parameters comprise one sixth PMI feedback parameter or a plurality of sixth PMI feedback parameters;

the one sixth PMI feedback parameter is determined based on the number of antenna ports in the first dimension, the number of antenna ports in the second dimension, and/or the number of beams selected, of a same transmission and reception point/radio remote head;

the plurality of sixth PMI feedback parameters are determined based on the number of antenna ports in the first dimension of a plurality of different transmission and reception points/radio remote heads, the number of antenna ports in the second dimension of the plurality of different transmission and reception points/radio remote heads, and/or the number of beams selected of the plurality of different transmission and reception points/radio remote heads.

29. The method for reporting channel state information according to claim 21, wherein each of the at least one CMR corresponds to a different V matrix, and the one or more PMI feedback parameters are carried in an X1 information field or an X2 information field;wherein the X1 information field is configured to carry a first wideband PMI feedback parameter, and the X2 information field is configured to carry a second wideband PMI feedback parameter or a narrowband PMI feedback parameter.

30. The method for reporting channel state information according to claim 29, wherein the first wideband PMI feedback parameter carried in the X1 information field comprises:

a first PMI feedback parameter, wherein the first PMI feedback parameter is determined based on a number of antenna ports in a first dimension and a number of oversamplings in a first dimension, or based on a number of antenna ports in a first dimension and a number of beams in a first dimension; or

a second PMI feedback parameter, wherein the second PMI feedback parameter is determined based on a number of antenna ports in a second dimension and a number of oversamplings in a second dimension, or based on a number of antenna ports in a second dimension and a number of beams in a second dimension; or

a third PMI feedback parameter, wherein the third PMI feedback parameter is used to indicate a relative difference between other layers and a first layer in terms of the first PMI feedback parameter and/or the second PMI feedback parameter.

31. The method for reporting channel state information according to claim 29, wherein the second wideband PMI feedback parameter or the narrowband PMI feedback parameter carried in the X2 information field is used for selecting a beam or determining a phase offset.

32. The method for reporting channel state information according to claim 30, wherein the first wideband PMI feedback parameter carried in the X1 information field comprises a plurality of different first PMI feedback parameters, and different first PMI feedback parameters correspond to different CMRs; or

the first wideband PMI feedback parameter carried in the X1 information field comprises a plurality of different second PMI feedback parameters, and different second PMI feedback parameters correspond to different CMRs; or
the first wideband PMI feedback parameter carried in the X1 information field comprises a plurality of different third PMI feedback parameters, and different third PMI feedback parameters correspond to different CMRs.

33. The method for reporting channel state information according to claim 21, wherein each of the at least one CMR corresponds to a different V matrix, and the one or more PMI feedback parameters comprise at least one of:

a fifth PMI feedback parameter, wherein the fifth PMI feedback parameter is determined based on a number of oversamplings in a first dimension/a number of beams in a first dimension, and a number of oversamplings in a second dimension/a number of beams in a second dimension;
a sixth PMI feedback parameter, wherein the sixth PMI feedback parameter is determined based on a number of antenna ports in a first dimension, a number of antenna ports in a second dimension and/or a number of beams selected;
a seventh PMI feedback parameter, wherein the seventh PMI feedback parameter is used to indicate a relative difference between other layers and a first layer in terms of the fifth PMI feedback parameter and/or the sixth PMI feedback parameter; or
a ninth PMI feedback parameter, wherein the ninth PMI feedback parameter is used for adjusting a relative magnitude of a wideband.

34. The method for reporting channel state information according to claim 23, wherein the one or more PMI feedback parameters comprise:

a plurality of different fifth PMI feedback parameters, different fifth PMI feedback parameters corresponding to different CMRs; and/or
a plurality of different sixth PMI feedback parameters, different sixth PMI feedback parameters corresponding to different CMRs; and/or
a plurality of different seventh PMI feedback parameters, different seventh PMI feedback parameters corresponding to different CMRs; and/or
a plurality of different ninth PMI feedback parameters, different ninth PMI feedback parameters corresponding to different CMRs.

35. An apparatus for reporting channel state information, comprising:

a measuring unit, configured to obtain the channel state information through a measurement based on at least one channel measurement resource CMR, wherein the channel state information comprises a measurement result of the measurement based on the at least one CMR, and the measurement result comprises a precoding matrix indicator PMI shared by the at least one CMR; and
a reporting unit, configured to report the channel state information.

36. An apparatus for reporting channel state information, comprising:an acquiring unit, configured to acquire the channel state information reported by a terminal, wherein the channel state information comprises a measurement result of a measurement based on at least one channel measurement resource CMR, and the measurement result comprises a precoding matrix indicator PMI shared by the at least one CMR.

37. A device for reporting channel state information, comprising:

   a processor; and
   a memory for storing instructions executable by the processor;
   wherein the processor is configured to perform the method for reporting channel state information according to any one of claims 1 to 17.

38. A device for reporting channel state information, comprising:

   a processor; and
   a memory for storing instructions executable by the processor;
   wherein the processor is configured to perform the method for reporting channel state information according to any one of claims 18 to 34.

39. A storage medium having stored therein instructions that, when executed by a processor of a terminal, enable the terminal to perform the method for reporting channel state information according to any one of claims 1 to 17.

40. A storage medium having stored therein instructions that, when executed by a processor of a network device, enable the network device to perform the method for reporting channel state information according to any one of claims 18 to 34.

FIG. 1

S11

the CSI is obtained by a measurement based on at least one CMR, the CSI includes a measurement result of the measurement based on the at least one CMR, and the measurement result includes a PMI shared by the at least one CMR

S12

the CSI is reported

FIG. 2

S21

the CSI reported by a terminal is acquired, the CSI includes a measurement result of a measurement based on at least one CMR, and the measurement result includes a PMI shared by the at least one CMR

FIG. 3

100

measuring unit — 101

reporting unit — 102

FIG. 4

200

acquiring unit — 201

FIG. 5

FIG. 6

FIG. 7

## INTERNATIONAL SEARCH REPORT

| | International application No. |
|---|---|
| | **PCT/CN2021/122915** |

**A. CLASSIFICATION OF SUBJECT MATTER**

H04W 72/04(2009.01)i; H04B 7/0456(2017.01)i

According to International Patent Classification (IPC) or to both national classification and IPC

**B. FIELDS SEARCHED**

Minimum documentation searched (classification system followed by classification symbols)

H04W,H04B

Documentation searched other than minimum documentation to the extent that such documents are included in the fields searched

Electronic data base consulted during the international search (name of data base and, where practicable, search terms used)

CNTXT; ENTXTC; ENTXT; CJFD; 3GPP: 信道测量资源, 信道状态信息, 增强, 降低, 减少, 节约, 节省, 信令, 开销, 预编码矩阵指示, 单一, 共享, 共用, 公用, 发送接收点, 射频拉远头, 控制资源集池索引, CMR, PMI, CSI, ENHANCEMENT, REDUCE, OVERHEAD, SIGNALING, SINGLE, COMMON, SHARE, TRP, RRH

**C. DOCUMENTS CONSIDERED TO BE RELEVANT**

| Category* | Citation of document, with indication, where appropriate, of the relevant passages | Relevant to claim No. |
|---|---|---|
| A | WO 2017193993 A1 (ZTE CORP.) 16 November 2017 (2017-11-16)<br>entire description | 1-40 |
| A | WO 2020156103 A1 (HUAWEI TECHNOLOGIES CO., LTD.) 06 August 2020 (2020-08-06)<br>entire description | 1-40 |
| A | US 2019260453 A1 (HUAWEI TECHNOLOGIES CO., LTD.) 22 August 2019 (2019-08-22)<br>entire description | 1-40 |
| A | CN 109150265 A (HUAWEI TECHNOLOGIES CO., LTD.) 04 January 2019 (2019-01-04)<br>entire description | 1-40 |
| X | ""R1-2103543 CSI enhancements for Multi-TRP and FR1 FDD reciprocity""<br>*Ericsson 3GPP tsg_ran\wg1_rl1*, 07 April 2021 (2021-04-07),<br>page 11, section 3 | 1, 18, 35-40 |

☐ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 June 2022** | **24 June 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br>**PCT/CN2021/122915**</td></tr>
</table>

| Patent document cited in search report | Publication date (day/month/year) | Patent family member(s) | Publication date (day/month/year) |
|---|---|---|---|
| WO 2017193993 A1 | 16 November 2017 | EP 3457603 A1 | 20 March 2019 |
|  |  | CN 107370559 A | 21 November 2017 |
| WO 2020156103 A1 | 06 August 2020 | CN 111510189 A | 07 August 2020 |
| US 2019260453 A1 | 22 August 2019 | CN 108023624 A | 11 May 2018 |
|  |  | JP 2019537874 A | 26 December 2019 |
|  |  | EP 3506522 A1 | 03 July 2019 |
| CN 109150265 A | 04 January 2019 | EP 3627881 A4 | 25 March 2020 |
|  |  | WO 2018228144 A1 | 20 December 2018 |
|  |  | US 2020119794 A1 | 16 April 2020 |

Form PCT/ISA/210 (patent family annex) (January 2015)